# EUROPEAN PATENT APPLICATION

(11) **EP 4 836 495 A1**
(43) Date of publication of application: **04.11.2026**
(21) Application number: 24923387.5
(22) Date of filing: 18.10.2024
(51) Int. Cl.: H04W 24/02

(54) **INFORMATION TRANSMISSION METHOD, COMMUNICATION APPARATUS, COMMUNICATION SYSTEM, AND STORAGE MEDIUM**

(30) Priority: 05.02.2024 CN 202410171480
(71) Applicant: Huawei Technologies Co., Ltd., Shenzhen, Guangdong 518129 (CN)
(72) Inventor: WEI, Xiuhong, Shenzhen, Guangdong 518129 (CN); HE, Hongli, Shenzhen, Guangdong 518129 (CN); LI, Xueru, Shenzhen, Guangdong 518129 (CN)
(74) Representative: Huawei European IPR
(86) International application number: PCT/CN2024/125682
(87) International publication number: WO 2025/167183

(57) **Abstract**

Embodiments of this application disclose an information transmission method, a communication apparatus, a communication system, and a storage medium, and are applied to the communication field, to reduce measurement result reporting overheads. The method in embodiments of this application includes: receiving a first reference signal, where a frequency domain resource on which the first reference signal is located includes a first frequency domain resource and a second frequency domain resource; and sending first information, where the first information includes a first measurement value and a first difference, the first measurement value is a velocity or a Doppler frequency corresponding to the first reference signal located on the first frequency domain resource, the first difference is a difference between a second measurement value and the first measurement value, and the second measurement value is a velocity or a Doppler frequency corresponding to the first reference signal located on the second frequency domain resource. In embodiments of this application, a velocity of a target can be calculated based on the reported first information when velocity measurement ambiguity occurs, to reduce reference signal overheads. In addition, the first difference is used to replace the second measurement value, to reduce the measurement result reporting overheads.

## Description

This application claims priority to Chinese Patent Application No. 202410171480.1, filed with the China National Intellectual Property Administration on February 5, 2024 and entitled "INFORMATION TRANSMISSION METHOD, COMMUNICATION APPARATUS, COMMUNICATION SYSTEM, AND STORAGE MEDIUM", which is incorporated herein by reference in its entirety.

### TECHNICAL FIELD

Embodiments of this application relate to the communication field, and in particular, to an information transmission method, a communication apparatus, a communication system, and a storage medium.

### BACKGROUND

In a sensing scenario, a sending device radiates an electromagnetic wave to an ambient environment to send a reference signal, and a receiving device receives a reference signal reflected by the ambient environment or directly receives the reference signal. By comparing the received reference signal with the transmitted reference signal through analysis, information related to the ambient environment can be sensed, for example, whether a to-be-detected target exists in the environment, a quantity of targets, a location and a velocity of each target, and the like; or a relative distance, an angle, a velocity, and the like between the sending device and the target receiving device can be measured.

To measure the velocity of the target, the sending device usually needs to periodically send a reference signal, and the receiving device measures the received reference signal, to obtain a measurement result related to the velocity of the target, for example, Doppler frequency information. When a true velocity of the target is greater than a maximum unambiguous velocity, velocity measurement ambiguity occurs. The true velocity may be represented as *V*_{*trut*h} = *v* + *kVₘₐₓ*, where *k* is an integer ambiguity, and *Vₘₐₓ* represents the maximum unambiguous velocity determined by the periodic reference signal. In this case, only an ambiguous velocity *v* obtained through the true velocity modulo the maximum unambiguous velocity can be obtained based on the measurement result, and the true velocity cannot be obtained.

To avoid the velocity measurement ambiguity, it is necessary to ensure that an actual maximum velocity expected to be measured is less than the maximum unambiguous velocity determined by the periodic reference signal. This may cause large reference signal overheads, especially in high-frequency cases. In addition, the receiving device usually needs to report the measurement result to the sending device or a third-party device. Therefore, how to reduce measurement result reporting overheads is also a problem that needs to be resolved.

### SUMMARY

This application discloses an information transmission method, a communication apparatus, a communication system, and a storage medium, and is applied to the communication field, to reduce measurement result reporting overheads.

A first aspect of this application provides an information transmission method. Optionally, the method is performed by a first apparatus. The first apparatus may be a network device, may be a component (for example, a processor, a chip, or a chip system) used in the network device, may be a logical module or software that can implement all or some functions of the network device, may be a terminal device, may be a component or an apparatus (for example, a processor, a chip, or a chip system) used in the terminal device, or may be a logical module or software that can implement all or some functions of the terminal device. In the method, the first apparatus receives a first reference signal from a second apparatus, where the first reference signal may be a reference signal or a reflected signal of the reference signal. A frequency domain resource on which the first reference signal is located includes at least a first frequency domain resource and a second frequency domain resource. The first apparatus obtains a first measurement value based on the first reference signal received on the first frequency domain resource, and obtains a second measurement value based on the first reference signal received on the second frequency domain resource. The first measurement value is one or more velocities or Doppler frequencies corresponding to the first frequency domain resource, and the second measurement value is one or more velocities or Doppler frequencies corresponding to the second frequency domain resource. The first apparatus sends first information, where the first information includes the first measurement value and a first difference, and the first difference is a difference between the second measurement value and the first measurement value. The first measurement value and the second measurement value may be used to calculate an integer ambiguity of a true velocity in a case of occurrence of velocity measurement ambiguity.

In this implementation, because the integer ambiguity may be calculated based on the first information, the second apparatus does not need to reduce a signal sending periodicity to avoid the velocity measurement ambiguity, thereby reducing reference signal sending overheads. In addition, because the first difference is used to replace the second measurement value in the first information, and a value range of the second measurement value is greater than a value range of the first difference, measurement result reporting overheads are reduced.

A second aspect of this application provides an information transmission method. Optionally, the method is performed by a second apparatus. The second apparatus may be a network device, may be a component (for example, a processor, a chip, or a chip system) used in the network device, may be a logical module or software that can implement all or some functions of the network device, may be a terminal device, may be a component or an apparatus (for example, a processor, a chip, or a chip system) used in the terminal device, or may be a logical module or software that can implement all or some functions of the terminal device. In the method, the second apparatus sends a first reference signal to a target or a first apparatus, where a frequency domain resource on which the first reference signal is located includes a first frequency domain resource and a second frequency domain resource. The second apparatus may receive first information from the first apparatus, where the first information includes a first measurement value and a first difference, and the first difference is a difference between a second measurement value and the first measurement value. The first measurement value and the second measurement value may be used to calculate an integer ambiguity of a true velocity in a case of occurrence of velocity measurement ambiguity.

In this implementation, the second apparatus may send the first reference signal, so that the second apparatus obtains the first information, to calculate the true velocity of the target in the case of the occurrence of the velocity measurement ambiguity. Therefore, the second apparatus does not need to reduce a signal sending periodicity to avoid the velocity measurement ambiguity, thereby reducing reference signal sending overheads.

A third aspect of this application provides an information transmission method. Optionally, the method is performed by a third apparatus. The third apparatus may be a network element or a server responsible for a sensing function in a core network, or may be an application server that processes a sensing service. In the method, the third apparatus receives first information from a first apparatus, where the first information includes a first measurement value and a first difference, and the first difference is a difference between a second measurement value and the first measurement value. The first measurement value and the second measurement value may be used to calculate an integer ambiguity of a true velocity in a case of occurrence of velocity measurement ambiguity.

A fourth aspect of this application provides a communication apparatus. The communication apparatus may be a network device, may be a component (for example, a processor, a chip, or a chip system) used in the network device, may be a logical module or software that can implement all or some functions of the network device, may be a terminal device, may be a component or an apparatus (for example, a processor, a chip, or a chip system) used in the terminal device, or may be a logical module or software that can implement all or some functions of the terminal device. The communication apparatus includes:
a receiving unit, configured to receive a first reference signal, where a frequency domain resource on which the first reference signal is located includes a first frequency domain resource and a second frequency domain resource; and
a sending unit, configured to send first information, where the first information includes a first measurement value and a first difference, the first measurement value is a velocity or a Doppler frequency corresponding to the first reference signal located on the first frequency domain resource, the first difference is a difference between a second measurement value and the first measurement value, and the second measurement value is a velocity or a Doppler frequency corresponding to the first reference signal located on the second frequency domain resource.

Based on the first aspect and the fourth aspect of this application, in some optional implementations, a first apparatus may send the first information to a second apparatus, may send the first information to a network element or a server responsible for a sensing function in a core network, or may send the first information to an application server that processes a sensing service.

A fifth aspect of this application provides a communication apparatus. The communication apparatus may be a network device, may be a component (for example, a processor, a chip, or a chip system) used in the network device, may be a logical module or software that can implement all or some functions of the network device, may be a terminal device, may be a component or an apparatus (for example, a processor, a chip, or a chip system) used in the terminal device, or may be a logical module or software that can implement all or some functions of the terminal device. The communication apparatus includes:
a sending unit, configured to send a first reference signal, where a frequency domain resource on which the first reference signal is located includes a first frequency domain resource and a second frequency domain resource; and
a receiving unit, configured to receive first information, where the first information includes a first measurement value and a first difference, the first measurement value is a velocity or a Doppler frequency corresponding to the first reference signal located on the first frequency domain resource, the first difference is a difference between a second measurement value and the first measurement value, and the second measurement value is a velocity or a Doppler frequency corresponding to the first reference signal located on the second frequency domain resource.

Based on the second aspect and the fifth aspect of this application, in some optional implementations, a second apparatus may perform sensing settlement based on the first information reported by a first apparatus, for example, calculate an integer ambiguity of a true velocity of a target, to obtain the true velocity of the target.

Based on the first aspect to the fifth aspect of embodiments of this application, in some optional implementations, the first difference may be represented by a formula *mod*(*x*₂ - *x*₁, *X*) or *mod*(*x*₁ - *x*₂, *X*), where *mod* represents a modulo operation, *x*₂ represents the second measurement value, *x*₁ represents the first measurement value, and *X* represents a difference between a maximum value and a minimum value of the second measurement value.

Based on the first aspect to the fifth aspect of embodiments of this application, in some optional implementations, when *x*₂ is greater than or equal to *x*₁, the first difference is *x*₂ - *x*₁, or when *x*₂ is less than *x*₁, the first difference is *x*₂ + *X* - *x*₁; or when *x*₁ is greater than or equal to *x*₂, the first difference is *x*₁ - *x*₂, or when *x*₁ is less than *x*₂, the first difference is *x*₁ - *x*₂ + *X*.

In this implementation, because a value range of the first difference, namely, *mod*(*x*₂ - *x*₁, *X*) or *mod*(*x*₁ - *x*₂, *X*), is less than a value range of the second measurement value *x*₂, measurement result reporting overheads are reduced.

Based on the first aspect to the fifth aspect of embodiments of this application, in some optional implementations, the first information further includes a third measurement value and a fourth measurement value, or the third measurement value and a second difference, where the third measurement value is an amplitude or a phase corresponding to the first measurement value, the fourth measurement value is an amplitude or a phase corresponding to the second measurement value, and the second difference is a difference between the fourth measurement value and the third measurement value.

In this implementation, the first apparatus includes, in the reported first information, the amplitude or the phase corresponding to the reported velocity or Doppler frequency, so that accuracy of calculating the true velocity of the target can be improved.

Based on the first aspect to the fifth aspect of embodiments of this application, in some optional implementations, a periodicity of the first reference signal is greater than a first threshold, and the first threshold is related to a maximum velocity expected to be measured.

In this implementation, because the periodicity of the first reference signal is greater than the first threshold, a quantity of times of sending the first reference signal in same duration is reduced, thereby reducing reference signal overheads.

Based on the first aspect to the fifth aspect of embodiments of this application, in some optional implementations, a difference between a frequency corresponding to the second frequency domain resource and a frequency corresponding to the first frequency resource is less than a second threshold, and the second threshold is related to one or more of the periodicity of the first reference signal, the maximum velocity expected to be measured, and the frequency corresponding to the first frequency resource.

In this implementation, it is ensured that the difference between the frequency corresponding to the second frequency domain resource and the frequency corresponding to the first frequency resource is less than the second threshold. This helps calculate the integer ambiguity based on ambiguous velocities or Doppler frequencies corresponding to the two frequencies, and a signal sending periodicity does not need to be reduced to avoid velocity measurement ambiguity, thereby reducing reference signal sending overheads.

Based on the first aspect to the fifth aspect of embodiments of this application, in some optional implementations, the second apparatus further sends second information, and the first apparatus receives the second information, where the second information includes one or more of the maximum velocity expected to be measured, a maximum integer ambiguity expected to be measured, and the value range of the first difference.

In this implementation, the first apparatus may perform differential processing on the first measurement value and the second measurement value based on the second information, to reduce the reporting overheads.

Based on the first aspect to the fifth aspect of embodiments of this application, in some optional implementations, the first information further includes a first frequency corresponding to the first frequency domain resource and a second frequency corresponding to the second frequency domain resource, or the first frequency and a third difference, where the third difference is a difference between the second frequency and the first frequency.

Based on the first aspect to the fifth aspect of embodiments of this application, in some optional implementations, the first reference signal may be a plurality of signals, including a second reference signal and a third reference signal, the second reference signal is located on the first frequency domain resource, the third reference signal is located on the second frequency domain resource, and the second reference signal and the third reference signal have a same periodicity.

Based on the first aspect to the fifth aspect of embodiments of this application, in some optional implementations, a time domain resource on which the second reference signal is located is the same as a time domain resource on which the third reference signal is located, or a time interval between the time domain resource on which the second reference signal is located and the time domain resource on which the third reference signal is located is less than a third threshold. In other words, the second reference signal and the third reference signal may be simultaneously sent, or a sending time interval is less than the third threshold.

Based on the first aspect to the fifth aspect of embodiments of this application, in some optional implementations, the first information corresponds to one or more targets, and each target corresponds to one path. The velocity in the first measurement value or the second measurement value indicates a velocity of one or more paths, and the Doppler frequency in the first measurement value or the second measurement value indicates a Doppler frequency of the one or more paths.

Based on the first aspect to the fifth aspect of embodiments of this application, in some optional implementations, the first measurement value is not equal to the second measurement value. In this case, the velocity measurement ambiguity occurs.

Based on the first aspect to the fifth aspect of embodiments of this application, in some optional implementations, the first measurement value used to obtain the first difference is associated with the second measurement value.

A sixth aspect of this application provides a communication apparatus. The communication apparatus may be a terminal device, may be a component or an apparatus (for example, a processor, a chip, or a chip system) used in the terminal device, or may be a logical module or software that can implement all or some functions of the terminal device. Alternatively, the communication apparatus may be a network device, may be a component (for example, a processor, a chip, or a chip system) used in the network device, or may be a logical module or software that can implement all or some functions of the network device. Alternatively, the communication apparatus may be a network element or a server responsible for a sensing function in a core network, or may be an application server that processes a sensing service.

The communication apparatus includes:
a processor, configured to execute a program, to enable the communication apparatus to perform the method according to any one of the first aspect, the second aspect, or the third aspect and the possible implementations of the first aspect, the second aspect, or the third aspect.

Optionally, the communication apparatus further includes a memory. The processor is coupled to the memory. The memory is configured to store the program.

A seventh aspect of embodiments of this application provides a chip or a chip system. The chip or the chip system includes at least one processor and a communication interface. The communication interface and the at least one processor are interconnected through a line. The at least one processor is configured to run a computer program or instructions, to perform the communication method according to any one of the possible implementations of the first aspect to the third aspect.

The communication interface in the chip may be an input/output interface, a pin, a circuit, or the like.

In a possible implementation, the chip or the chip system described above in this application further includes at least one memory, and the at least one memory stores instructions. The memory may be a storage unit in the chip, for example, a register or a cache, or may be a storage unit of the chip, for example, a read-only memory or a random access memory.

An eighth aspect of embodiments of this application provides a communication system, including a communication apparatus that performs any one of the first aspect and the possible implementations of the first aspect, and a communication apparatus that performs any one of the second aspect and the possible implementations of the second aspect; or
including the communication apparatus that performs any one of the first aspect and the possible implementations of the first aspect, the communication apparatus that performs any one of the second aspect and the possible implementations of the second aspect, and the communication apparatus that performs any one of the third aspect and the possible implementations of the third aspect.

A ninth aspect of embodiments of this application provides a computer-readable storage medium, including instructions. When the instructions are run on a computer, the computer is enabled to perform the method according to the first aspect, the computer is enabled to perform the method according to the second aspect, or the computer is enabled to perform the method according to the third aspect.

A tenth aspect of embodiments of this application provides a computer program product including instructions. When the computer program product is run on a computer, the computer is enabled to perform the method according to the first aspect, the computer is enabled to perform the method according to the second aspect, or the computer is enabled to perform the method according to the third aspect.

For beneficial effects of the sixth aspect to the tenth aspect, refer to the beneficial effects of the first aspect to the fifth aspect and the corresponding implementations of the first aspect to the fifth aspect. Details are not described herein again.

### BRIEF DESCRIPTION OF DRAWINGS

FIG. 1 is a diagram of a network architecture according to an embodiment of this application;
FIG. 2 is a diagram of an application scenario of an information transmission method according to an embodiment of this application;
FIG. 3 is a diagram of an embodiment of an information transmission method according to an embodiment of this application;
FIG. 4 is a diagram of an embodiment of a reference signal according to an embodiment of this application;
FIG. 5 is a diagram of another embodiment of a reference signal according to an embodiment of this application;
FIG. 6 is a diagram of another embodiment of a reference signal according to an embodiment of this application;
FIG. 7 shows a relationship between integer ambiguities and true velocities corresponding to different frequencies according to an embodiment of this application;
FIG. 8 shows a velocity spectrum of two targets at a same frequency according to an embodiment of this application;
FIG. 9 shows a velocity spectrum of two targets at a same frequency according to an embodiment of this application;
FIG. 10 shows velocity spectra of two targets at different frequencies according to an embodiment of this application;
FIG. 11 is a diagram of Doppler spectra of two targets at different frequencies according to an embodiment of this application;
FIG. 12 is a diagram of Doppler spectra of two targets at different frequencies according to an embodiment of this application;
FIG. 13 is a diagram of Doppler spectra of two targets at different frequencies according to an embodiment of this application;
FIG. 14 is a diagram of Doppler spectra of two targets at different frequencies according to an embodiment of this application;
FIG. 15 shows velocity spectra of a single target at different frequencies according to an embodiment of this application;
FIG. 16 shows velocity spectra of a single target at different frequencies according to an embodiment of this application;
FIG. 17 is a diagram of another embodiment of an information transmission method according to an embodiment of this application;
FIG. 18 is a diagram of another embodiment of an information transmission method according to an embodiment of this application;
FIG. 19 is a diagram of another embodiment of an information transmission method according to an embodiment of this application;
FIG. 20 is a diagram of an embodiment of a communication apparatus according to an embodiment of this application;
FIG. 21 is a diagram of another embodiment of a communication apparatus according to an embodiment of this application;
FIG. 22 is a diagram of another embodiment of a communication apparatus according to an embodiment of this application; and
FIG. 23 is a diagram of another embodiment of a communication apparatus according to an embodiment of this application.

### DESCRIPTION OF EMBODIMENTS

Embodiments of this application disclose an information transmission method, a communication apparatus, a communication system, and a storage medium, so that a velocity of a target can be calculated based on reported first information when velocity measurement ambiguity occurs, to reduce reference signal overheads. In addition, a first difference is used to replace a second measurement quantity, to reduce measurement result reporting overheads.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In the specification, the claims, and the accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, step numbers in embodiments described in this application are merely for distinguishing between different steps, but are not for limiting a sequence of the steps. In addition, the terms "include", "have" and any other variants mean to cover the non-exclusive inclusion, so that a process, method, system, product, or device that includes a series of units is not necessarily limited to those units, but may include other units not expressly listed or inherent to such a process, method, system, product, or device.

In this application, "indicating" may include "directly indicating" and "indirectly indicating". When a piece of indication information indicates A, the indication information may directly indicate A or indirectly indicate A, but it does not indicate that the indication information definitely carries A.

Furthermore, specific indication manners may alternatively be various existing indication manners, for example, but not limited to, the foregoing indication manners and various combinations thereof. For details of the various indication manners, refer to a conventional technology. Details are not described in this specification. It can be learned from the foregoing descriptions that, for example, when a plurality of pieces of information of a same type need to be indicated, different information may be indicated in different manners. In a specific implementation process, a needed indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

In embodiments of this application, all of the descriptions "when", "in a case that", "if", "assuming that", and the like mean that a device performs corresponding processing in an objective case, but are not intended to limit time. In addition, the descriptions do not necessarily mean that the device needs to perform a determining action during implementation, and do not mean any other limitation either.

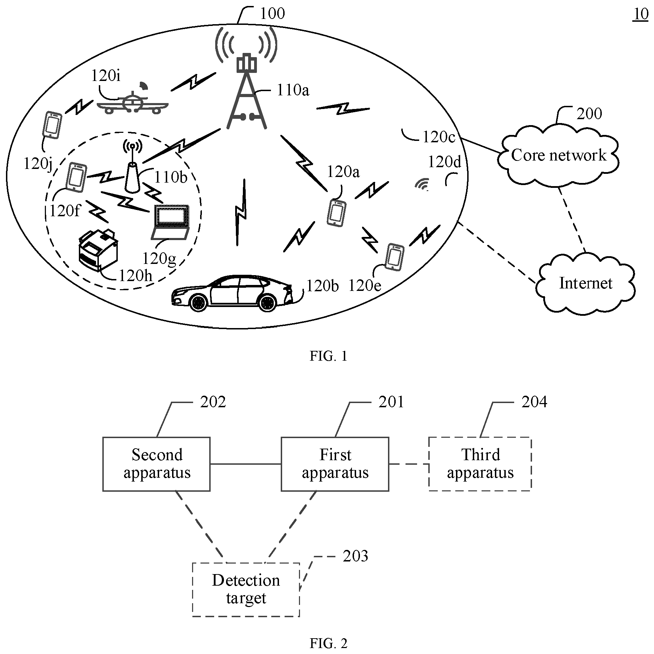

FIG. 1 is a diagram of a possible and non-limiting system. As shown in FIG. 1, a communication system 10 includes a radio access network (radio access network, RAN) 100 and a core network (core network, CN) 200. The RAN 100 includes at least one RAN node (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a logical function of the core network and a logical function of the radio access network.

The RAN 100 may be a cellular system related to the 3rd Generation Partnership Project (3rd Generation Partnership Project, 3GPP), for example, a 4G mobile communication system, a 5G mobile communication system, or a future-oriented evolved system (for example, a 6G mobile communication system). The RAN 100 may alternatively be an open access network (open RAN, O-RAN, or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

The RAN node 110 sometimes may also be referred to as an access network device, a RAN entity, an access node, or the like, and forms a part of the communication system, to help the terminal implement radio access. A plurality of RAN nodes 110 in the communication system 10 may be nodes of a same type, or may be nodes of different types. In some scenarios, roles of the RAN node 110 and the terminal 120 are relative. For example, a network element 120i in FIG. 1 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal. Sometimes, both the RAN node 110 and the terminal 120 are referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle to everything (vehicle to everything, V2X) technology may be a road side unit (road side unit, RSU). All or some functions of the RAN node in this application may alternatively be implemented by using a software function run on hardware, or may be implemented by using a virtualization function instantiated on a platform (for example, a cloud platform). A communication module, a circuit, or a chip that performs a corresponding communication function may be further disposed in the RAN node. The RAN node may be further configured with program instructions used to perform a corresponding communication function and corresponding program instructions. The RAN node in this application may alternatively be a logical node, a logical module, or software that can implement all or some functions of the RAN node.

In another possible scenario, a plurality of RAN nodes cooperate to assist the terminal in implementing radio access, and different RAN nodes separately implement some functions of a base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal in this application may be deployed on land, including an indoor terminal, an outdoor terminal, a handheld terminal, or a vehicle-mounted terminal; may be deployed on a water surface (for example, on a ship); or may be deployed in the air (for example, on an aircraft, a balloon, or a satellite). The terminal may also be referred to as a terminal device. The terminal device may be user equipment (user equipment, UE), a mobile station (mobile station, MS), a mobile terminal (mobile terminal, MT), or the like, or may be a device configured to provide voice or data connectivity for a user. The UE includes a handheld device having a wireless communication function, a vehicle-mounted device (for example, a car, a bicycle, an electric vehicle, an airplane, a ship, a train, or a high-speed train), a wearable device (for example, a smartwatch, a smart band, or a pedometer), or a compute device. For example, the UE may be a mobile phone (mobile phone), a mobile internet device (mobile internet device, MID), or the like. The UE may alternatively be a smart robot, a robot arm, a workshop device, a smart home device (for example, a refrigerator, a television, an air conditioner, or an electric meter), a wireless terminal in industrial control, a wireless terminal in self-driving, a wireless terminal in telemedicine, a wireless terminal in a smart grid (smart grid), a wireless terminal in transportation security, a wireless terminal in a smart city (smart city), a wireless terminal in a smart home (smart home), a vehicle-mounted terminal, a road side unit (road side unit, RSU) having a terminal function, a flight device (for example, a smart robot, a hot air balloon, an uncrewed aerial vehicle, an airplane), or the like. The terminal may alternatively be another device having a terminal function. For example, the terminal may alternatively be a device that functions as a terminal in device to device (device to device, D2D) communication.

In this application, the terminal may be a terminal in an internet of things (internet of things, IoT) system. IoT is an important component in development of future information technologies. A main technical feature of the IoT is to connect an object to a network by using a communication technology, to implement an intelligent network of human-machine interconnection and thing-thing interconnection. The terminal in this application may be a terminal in machine type communication (machine type communication, MTC). The terminal in this application may be a vehicle-mounted module, a vehicle-mounted component, an onboard component, a vehicle-mounted chip, or a vehicle-mounted unit that is built in a vehicle as one or more components or units. The vehicle uses the vehicle-mounted module, the vehicle-mounted component, the onboard component, the vehicle-mounted chip, or the vehicle-mounted unit that is built in the vehicle, to implement the method in this application. The terminal in this application may be a means of delivery, for example, a vehicle. Therefore, this application may be applied to an internet of vehicles, for example, vehicle to everything (vehicle to everything, V2X), long term evolution-vehicle (long term evolution-vehicle, LTE-V), and vehicle to vehicle (vehicle to vehicle, V2V).

FIG. 2 shows a possible application scenario of an information transmission method according to an embodiment of this application. In this scenario, a second apparatus 202 is configured to configure and send a reference signal, or may directly send the reference signal, and a first apparatus 201 receives the reference signal and obtains a measurement result based on the received signal. Optionally, a network architecture further includes a detection target 203. The second apparatus 202 sends a reference signal to the detection target 203. After the detection target 203 reflects the reference signal, the first apparatus 201 receives a reflected signal of the reference signal, and obtains a measurement result based on the reflected signal. After obtaining the measurement result, the first apparatus 201 may report the measurement result to the second apparatus 202, and the second apparatus 202 performs sensing settlement based on the measurement result, for example, calculates a true velocity of the detection target 203. Optionally, the network architecture further includes a third apparatus 204. The third apparatus 204 may be a network element or a server responsible for a sensing function in a core network, or may be an application server that processes a sensing service. The first apparatus 201 reports the measurement result to the third apparatus 204, and the third apparatus 204 performs sensing settlement, for example, obtains the true velocity of the detection target through calculation based on the measurement result. Optionally, the third apparatus 204 may alternatively configure a reference signal for the first apparatus.

The first apparatus can implement one or more of functions such as sensing, positioning, or communication. The first apparatus is, for example, a terminal device or a functional module disposed in the terminal device, for example, a chip system or a module in the chip system; or the first apparatus is, for example, a network device or a functional module disposed in the network device, for example, a chip system or a module in the chip system. The second apparatus can implement one or more of functions such as sensing, positioning, or communication. The second apparatus is, for example, a terminal device or a functional module disposed in the terminal device, for example, a chip system or a module in the chip system; or the second apparatus is, for example, a network device or a functional module disposed in the network device, for example, a chip system or a module in the chip system. The first apparatus and the second apparatus may be apparatuses of a same type, for example, both are terminal devices. Alternatively, the first apparatus and the second apparatus may be apparatuses of different types, for example, the first apparatus is the terminal device, and the second apparatus is the network device. This is not limited in embodiments of this application.

A form of the terminal is not limited in this application. An apparatus configured to implement a function of the terminal may be the terminal, or may be an apparatus, for example, a chip system, that can support the terminal in implementing the function. The apparatus may be mounted in the terminal or used in cooperation with the terminal.

A form of the network device is not limited in this application. An apparatus configured to implement a function of the network device may be the network device, or may be an apparatus, for example, a chip system, that can support the network device in implementing the function. The apparatus may be installed in the network device or used in cooperation with the network device.

Velocity measurement is an important and fundamental capability for a sensing system. For example, in a smart transportation scenario, assisted driving and vehicle violation detection are implemented based on a velocity of a pedestrian or a vehicle. In a smart home scenario, a velocity is important data in applications such as security monitoring, interactive games, and health detection (for example, determining whether a person falls down). Currently, to measure a velocity of a target, a reference signal usually needs to be periodically sent. Information related to the velocity of the target may be obtained based on reference signals received at different moments. A maximum unambiguous velocity that may be measured is related to a periodicity and a frequency of the reference signal. The following provides an example of velocity measurement that is based on the reference signal. One target is used as an example. A reference signal is sent in M time units whose carrier frequency is *f*, and a sending periodicity is *T*. That is, a time interval between adjacent time units in the M time units is *T*. In this case, a received signal in an m^{th} time unit may be represented as: ${d}_{RX} \left[m\right] = {d}_{TX} \left[m\right] {σe}^{- j 2 πf \frac{2 R}{c}} {e}^{j 2 πf \frac{2 vmT}{c}}$

*m* = 0,1, ... , *or M* - 1, *c* is a velocity of light, *R* represents a relative distance between a sensing device and the target, *v* represents a relative velocity between the sensing device and the target, σ represents a power attenuation factor, and *d_{TX}*[*m*] represents a reference signal sent in the m^{th} time unit.

Due to movement of the target, a frequency of the received signal has shifted relative to a frequency of the sent signal, where Doppler may be represented as: ${f}_{d} = \frac{2 vf}{c}$

The Doppler may also be referred to as a Doppler frequency or a Doppler frequency shift. Channel information in different time units may be obtained by dividing the Doppler by the known reference signal d_{TX}[m]: $h \left[m\right] = {σe}^{- j 2 πf \frac{2 R}{c}} {e}^{j 2 {πf}_{d} mT}$

The velocity of the target or the Doppler caused by the movement of the target causes a phase rotation between different time units m. Therefore, the velocity of the target may be estimated based on the channel information obtained in the different time units. For example, a Doppler spectrum of a channel may be obtained by performing Fourier transform on the channel information in the different time units, and the Doppler spectrum satisfies a formula: $F \left[g\right] = {\sum }_{m = 0}^{M - 1} h \left[m\right] {e}^{- j 2 π \frac{mg}{M}} = \overline{σ} {\sum }_{m = 0}^{M - 1} {e}^{j 2 {πmTf}_{d}} {e}^{- j 2 π \frac{mg}{M}} = \overline{σ} {\sum }_{m = 0}^{M - 1} {e}^{j 2 πm \left({f}_{d}T-\frac{g}{M}\right)}$

In the formula: $\overline{σ} = {σe}^{- j 2 πf \frac{2 R}{c}}$

g represents an index on the Doppler spectrum. ${f}_{d} T - \frac{g}{M} = 0$ is set, so that a peak value on the Doppler spectrum can be obtained. For example, when $\overline{g} = \left⌊{f}_{d}MT\right⌋$, a peak value is obtained for *F*[*g̅*], where └ ┘ represents rounding down. Therefore, the Doppler *f_{d}* caused by the movement of the target may be estimated based on a location *g̅* corresponding to the peak value on the Doppler spectrum, to estimate the velocity *v* of the target. It should be understood that a phase change of a signal is always within a range of 0 to 2*π* or -*π* to *π*. When the velocity of the target is so large, in other words, the Doppler *f_{d}* caused by the movement of the target is so large that a phase rotation 2*πf_{d}T* actually caused between adjacent time units exceeds 2*π*, a phase rotation between signals received in the adjacent time units cannot reflect a phase rotation caused by a true velocity of the target. In this case, the velocity obtained based on the received signal is not the true velocity of the target, that is, velocity measurement ambiguity occurs.

When the velocity measurement ambiguity occurs, the true velocity may be represented as: ${V}_{trut h} = {v}_{ambiguity} + {kV}_{max}$

*k* is an integer ambiguity, and *Vₘₐₓ* is a maximum unambiguous velocity. In this case, only an ambiguous velocity *v_{ambiguity}* obtained through the true velocity modulo the maximum unambiguous velocity can be obtained through measurement on the Doppler spectrum, and the integer ambiguity *k* cannot be obtained. The maximum unambiguous velocity *Vₘₐₓ* may be understood as a velocity corresponding to a case in which the actual phase rotation caused between the adjacent time units by the Doppler due to the movement of the target is exactly 2*π*, and is a critical value.

To avoid the velocity measurement ambiguity, it is necessary to ensure that a maximum velocity ${V}_{max}^{truth}$ expected to be measured is less than the maximum unambiguous velocity ${V}_{max} = \frac{c}{2 Tf}$ determined by the periodic reference signal. In this case, a range of an unambiguous velocity that can be measured may be represented as 0 to $\frac{c}{2 Tf}$, and the sending periodicity *T* satisfies: $T < \frac{c}{2 {V}_{max}^{truth} f}$

When an actually expected velocity measurement range remains unchanged, as a frequency increases, a needed reference signal sending periodicity becomes shorter, that is, a quantity of times of sending a reference signal in same duration increases, resulting in larger reference signal overheads. For example, when a carrier frequency is 5 gigahertz (GHz), to implement velocity measurement of 10 meters per second (m/s), a sending periodicity is 3 milliseconds (ms), and a quantity of times of sending a reference signal within 15 ms is 5. When a carrier frequency is 60 GHz, to implement velocity measurement of 10 m/s, a sending periodicity is 0.25 ms, and a quantity of times of sending a reference signal within 15 ms is 60.

In view of this, embodiments of this application provide separate velocity measurement that is based on reference signals on different frequency domain resources. Because the different frequency domain resources correspond to different frequencies, the reference signals located on the different frequency domain resources correspond to different maximum unambiguous velocities. When velocity measurement ambiguity occurs, different ambiguous velocities may be obtained through measurement based on the reference signals on the different frequency domain resources, and an integer ambiguity may be solved based on a plurality of ambiguous velocities obtained through measurement based on reference signals on a plurality of frequency domain resources, to obtain a true velocity of a target. Therefore, in embodiments of this application, a periodicity of the reference signal is allowed to be increased, to reduce reference signal overheads. In addition, the plurality of ambiguous velocities obtained through the measurement based on the reference signals on the plurality of frequency domain resources are located in a limited window, and measurement result reporting overheads may be reduced by differential reporting at a plurality of frequencies.

It may be understood that a sensing device can usually measure only a radial velocity of a target relative to the device. The velocity mentioned in this specification may be understood as the radial velocity of the target relative to the sensing device. The target may move in a direction away from the device, or may move in a direction toward the device. Therefore, the velocity or a Doppler frequency may be directional (that is, a value may be positive or negative). The following uses an example in which the value of the velocity or the Doppler frequency is positive for description.

It may be understood that the foregoing representation manners of the received signal, the channel, the Doppler frequency, the maximum unambiguous velocity, and the unambiguous velocity are merely examples. In specific application, there may be another representation form. For example, the Doppler frequency may alternatively be represented as ${f}_{d} = \frac{vf}{c}$, the maximum unambiguous velocity may alternatively be represented as ${V}_{max} = \frac{c}{4 Tf}$, and a range of the unambiguous velocity may alternatively be represented as - $\frac{c}{4 Tf}$ *to* $\frac{c}{4 Tf}$. This is not specifically limited herein. The following uses an example in which a representation form of the Doppler frequency is ${f}_{d} = \frac{2 vf}{c}$, a representation form of the maximum unambiguous velocity is ${V}_{max} = \frac{c}{2 Tf}$, and a representation form of the range of the unambiguous velocity is 0 *to* $\frac{c}{2 Tf}$ for description.

It should be understood that, in embodiments of this application, a maximum velocity ${V}_{max}^{truth}$ expected to be measured is a possible maximum true velocity of the target, and an expected velocity measurement range may be determined by the maximum velocity expected to be measured, and may be, for example, 0 *to* ${V}_{max}^{truth}$.

In embodiments of this application, a time unit is, for example, a frame (frame), and a time subunit is, for example, a subframe (subframe), a slot (slot), a mini-slot (mini-slot), an OFDM symbol group, or an OFDM symbol; the time unit is, for example, a subframe, and the time subunit is, for example, a slot, a mini-slot, an OFDM symbol group, or an OFDM symbol; the time unit is, for example, a slot, and the time subunit is, for example, a mini-slot, an OFDM symbol group, or an OFDM symbol; the time unit is, for example, a mini-slot, and the time subunit is, for example, an OFDM symbol group or an OFDM symbol; the time unit is, for example, an OFDM symbol group, and the time subunit is, for example, an OFDM symbol; or the time unit is an OFDM symbol. In embodiments of this application, a frequency unit is, for example, a subcarrier (subcarrier), or may be another unit in frequency domain.

In embodiments of this application, "including..." may also be understood as "indicating...". For example, that the first information includes the first measurement value may be understood as that the first information indicates the first measurement value. The first information may directly indicate the first measurement value, or may indirectly indicate the first measurement value by using another value.

In embodiments of this application, a "value range" of a specific variable may be understood as a possible minimum value of the variable to a possible maximum value of the variable, or may be understood as the possible maximum value of the variable minus the possible minimum value of the variable. For example, if a possible minimum value of a variable x is a, and a possible maximum value of the variable x is b, a value range of x may be understood as a to b, or may be understood as b-a. When the possible minimum value of the variable x is 0, the possible maximum value of the variable may also be understood as the value range of the variable.

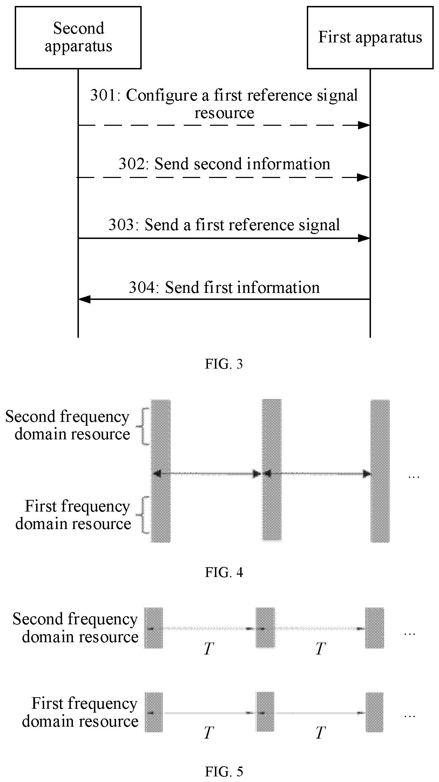

Refer to FIG. 3. An information transmission method according to an embodiment of this application includes the following steps.

Optionally, in 301, a second apparatus configures a first reference signal resource for a first apparatus.

For example, the second apparatus may send first configuration information to the first apparatus, where the first configuration information is used to configure the first reference signal resource, and the first reference signal resource may be used to send and/or receive a first reference signal. The first reference signal resource includes a time domain resource and a frequency domain resource. The first reference signal resource may be a periodic resource in time domain. In each periodicity, the first reference signal resource may occupy one or more time subunits. The periodicity of the first reference signal resource may be understood as a time interval between a start time subunit in a former periodicity and a start time subunit in a latter periodicity in two adjacent periodicities. Optionally, the first reference signal resource may occupy one or more periodic time domain resources with a same periodicity in time domain, and each periodicity of each periodic time domain resource may include one or more time subunits. The first reference signal resource may occupy a plurality of frequency domain units in frequency domain, and the plurality of frequency domain units may be contiguously distributed, or may be distributed in a comb (comb) manner. It may also be understood as that the first reference signal resource may occupy one or more frequency domain resources in frequency domain, and each frequency domain resource may include one or more frequency domain units. When each frequency domain resource includes a plurality of frequency domain units, the plurality of frequency domain units may be contiguously distributed, or may be distributed in a comb manner. Usually, there is an association relationship between a reference signal resource and a reference signal. Therefore, configuration information of the reference signal resource may also be understood as configuration information of the reference signal, and a time domain resource of the reference signal resource may also be understood as a time domain resource on which the reference signal is located, a time domain resource occupied by the reference signal, or a time domain resource of the reference signal. A frequency domain resource of the reference signal resource may also be understood as a frequency domain resource on which the reference signal is located, a frequency domain resource occupied by the reference signal, or a frequency domain resource of the reference signal. A periodicity of the reference signal resource may also be understood as a periodicity of the reference signal. A frequency corresponding to the frequency domain resource of the reference signal may also be understood as a frequency corresponding to the reference signal.

Specifically, the frequency domain resource occupied by the first reference signal includes a first frequency domain resource and a second frequency domain resource, the first frequency domain resource corresponds to a first frequency *f*₁, and the second frequency domain resource corresponds to a second frequency *f*₂. In a possible implementation, the first reference signal may be a large-bandwidth reference signal. As shown in FIG. 4, the first frequency domain resource and the second frequency domain resource are a part of the frequency domain resource occupied by the first reference signal, and the periodicity of the first reference signal is *T*.

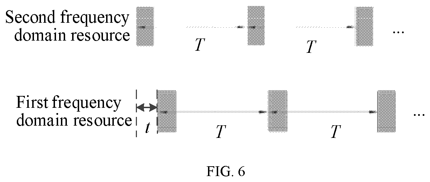

In a possible implementation, the first reference signal may alternatively be a plurality of reference signals, as shown in FIG. 5 and FIG. 6. The first reference signal includes a second reference signal and a third reference signal. The second reference signal is located on the first frequency domain resource, the third reference signal is located on the second frequency domain resource, and the second reference signal and the third reference signal have a same periodicity, that is, both of which are the periodicity *T*. It should be understood that both the second reference signal and the third reference signal are used to measure a velocity of a target, and the second reference signal and the third reference signal cannot be too far apart in time. Therefore, a time domain resource for sending the second reference signal may be the same as a time domain resource on which the third reference signal is located, as shown in FIG. 6; or the time domain resource on which the second reference signal is located is different from the time domain resource on which the third reference signal is located, but a time interval *t* between the two time domain resources is less than a third threshold, as shown in FIG. 6. It should be noted that the time interval between the two time domain resources may be a time interval between start time subunits in a same periodicity. This is not specifically limited herein. To reduce reference signal overheads, in embodiments of this application, the periodicity *T* is greater than a first threshold, and the first threshold is related to a maximum velocity expected to be measured. In other words, velocity measurement ambiguity may occur. For example, the periodicity *T* satisfies: $T > \frac{c}{2 {V}_{max}^{truth} min \left({f}_{1}, {f}_{2}\right)}$

min (*f*₁, *f*₂) represents a smaller value in *f*₁ and *f*₂.

In embodiments of this application, because the periodicity of the first reference signal is greater than the first threshold, a quantity of times of sending the first reference signal in same duration is reduced, thereby reducing the reference signal overheads.

In a possible implementation, the first reference signal may include more reference signals that occupy different frequency domain resources, or the first reference signal may occupy more frequency domain resources. This is not specifically limited herein. *f*₁ may be less than *f*₂, or *f*₁ may be greater than *f*₂. This is not specifically limited herein.

In embodiments of this application, any one of the first frequency domain resource, the second frequency domain resource, or a plurality of frequency domain resources occupied by the first reference signal is, for example, a subcarrier, a resource element (resource element, RE), a resource block (resource block, RB), a resource block set (RB set), an interleaving unit (interlace), an interlace group, a subchannel (subchannel), a bandwidth part (bandwidth part, BWP), a carrier (carrier), or a frequency band (band). The frequency corresponding to the frequency domain resource may be a frequency of a subcarrier that is with a lowest or highest frequency and included in the frequency domain resource, may be a frequency of a center subcarrier included in the frequency domain resource, or may be a frequency of any subcarrier included in the frequency domain resource. This is not specifically limited herein.

Optionally, the first reference signal resource may be preconfigured in the first apparatus, or may be predefined in a protocol. In this case, 201 may not need to be performed.

It should be understood that a maximum unambiguous velocity corresponding to the reference signal is related to the periodicity of the reference signal and frequency domain. Although the periodicity of the reference signal located on the first frequency domain resource is the same as the periodicity of the reference signal located on the second frequency domain resource, because the first frequency *f*₁ and the second frequency *f*₂ are different frequencies, the reference signal located on the first frequency domain resource and the reference signal located on the second frequency domain resource correspond to different maximum unambiguous velocities. The two maximum unambiguous velocities are respectively referred to as a maximum unambiguous velocity corresponding to *f*₁ and a maximum unambiguous velocity corresponding to *f*₂ below. The following uses as an example in which *f*₁ < *f*₂ for description. When the velocity measurement ambiguity occurs, a true velocity *V*_{*trut*h} of the target may be represented as: ${V}_{trut h} = {v}_{1} + {k}_{1} {V}_{max}^{1}$ or ${V}_{truth} = {v}_{2} + {k}_{2} {V}_{max}^{2}$

*v*₁ and *v*₂ are respectively results obtained through *V*_{*trut*h} modulo the maximum unambiguous velocity ${V}_{max}^{1}$ corresponding to *f*₁ and the maximum unambiguous velocity ${V}_{max}^{2}$ corresponding to *f*₂. *v*₁ and *v*₂ may be respectively understood as an ambiguous velocity corresponding to *f*₁ and an ambiguous velocity corresponding to *f*₂, and may be respectively obtained through measurement based on the reference signal located on the first frequency domain resource and the reference signal located on the second frequency domain resource. *k*₁ is an integer ambiguity corresponding to *f*₁, and *k*₂ is an integer ambiguity corresponding to *f*₂. According to the foregoing two formulas, the following may be further obtained: ${v}_{1} + {k}_{1} {V}_{max}^{1} = {v}_{2} + {k}_{2} {V}_{max}^{2}$ ${v}_{2} - {v}_{1} = {k}_{1} {V}_{max}^{1} - {k}_{2} {V}_{max}^{2}$

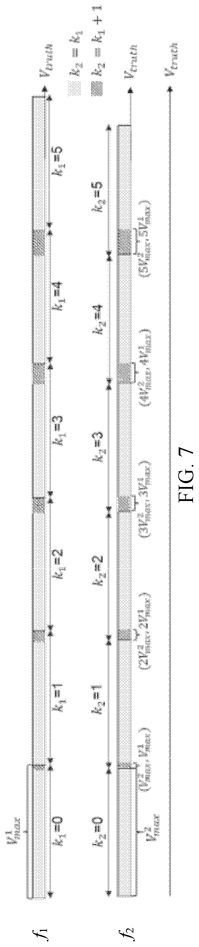

To obtain the true velocity of the target, the integer ambiguity *k*₁ or *k*₂ needs to be further solved. To make the foregoing formula have a unique solution, *k*₁ and *k*₂ need to satisfy a specific constraint relationship. Through analysis, it is found that *k*₁ and *k*₂ satisfy *k*₂ = *k*₁ or *k*₂ = *k*₁ + 1 in most cases. Specifically, because maximum unambiguous velocities corresponding to different frequencies are different, integer ambiguities vary with true velocities at different frequencies, as shown in FIG. 7. FIG. 7 shows a change of the integer ambiguities that correspond to *f*₁ and *f*₂ and vary with true velocities. It can be learned from the figure that *k*₁ and *k*₂ satisfy *k*₂ = *k*₁ in most cases, as shown by a gray part in FIG. 7; or satisfy *k*₂ = *k*₁ + 1, as shown by a shadow part in FIG. 7.

As the true velocity increases, the shadow part shown in FIG. 7 becomes larger. When the true velocity is between $\left(\overline{k}+1\right) {V}_{max}^{2}$ and $\overline{k} {V}_{max}^{1}$, *k*₂ = *k*₁ + 2 may occur, where *k̅* satisfies: $\overline{k} > \frac{{V}_{max}^{2}}{{V}_{max}^{1} - {V}_{max}^{2}} = \frac{{f}_{1}}{{f}_{2} - {f}_{1}}$

In this case, the true velocity may be considered to have exceeded an actual maximum velocity expected to be measured. For example, when the periodicity *T* = 2.5 *ms, f*₁ = 60 *GHz*, and *f*₂ = 60.5 *GHz*, a reference signal on *f*₁ may be used to implement unambiguous velocity measurement of 0 m/s to 1 m/s, and a reference signal on *f*₂ may be used to implement unambiguous velocity measurement of 0 m/s to 0.9917 m/s. In this case, a minimum value of *k̅* is 121. In other words, the true velocity is greater than 121 m/s, and the velocity exceeds a possible true velocity of the target. Therefore, it may be considered that there are only two relationships between *k*₁ and *k*₂: *k*₂ = *k*₁ or *k*₂ *= k*₁ *+* 1.

As shown in FIG. 7, when *v*₂ - *v*₁ ≥ 0, *k*₂ = *k*₁. In other words, when the true velocity corresponds to a same integer ambiguity at two frequencies, because the maximum unambiguous velocity corresponding to the lower frequency *f*₁ is greater than the maximum unambiguous velocity corresponding to the higher frequency *f*₁, the ambiguous velocity *v*₁ corresponding to *f*₁ is less than or equal to the ambiguous velocity *v*₂ corresponding to *f*₂. When *v*₂ *- v*₁ < 0, *k*₂ = *k*₁ + 1. Therefore, a specific relationship that *k*₁ and *k*₂ satisfy may be determined depending on whether *v*₂ - *v*₁ is a positive number or a negative number.

In a possible implementation, to restrict *k*₁ and *k*₂ to have only the relationship of *k*₂ = *k*₁ or *k*₂ = *k*₁ *+* 1, when configuring the first reference signal resource, the second apparatus may design *f*₁ and *f*₂ based on an actual maximum velocity ${V}_{max}^{truth}$ expected to be measured and the periodicity *T.* Specifically, $\frac{{f}_{1}}{{f}_{2} - {f}_{1}}$ should be greater than an actual maximum integer ambiguity expected to be measured, where *f*₁ is usually much greater than *f*₂ *- f*₁. Therefore, implementation may be performed by constraining *f*₂ *- f*₁ to be less than the first threshold. In some carrier frequencies and sending periodicities, a maximum value of *f*₂ - *f*₁ is shown in Table 1 below:

**Table 1**

| Carrier frequency | Sending periodicity (ms) | Maximum velocity expected to be measured | | | |
|---|---|---|---|---|---|
| | | 10 km/h | 30 km/h | 60 km/h | 120 km/h |
| 26 GHz | 5 ms | - | 3714 MHz | 1857 MHz | 928 MHz |
| | 10 ms | 6500 MHz | 1857 MHz | 928 MHz | 456 MHz |
| | 20 ms | 2888 MHz | 928 MHz | 456 MHz | 226 MHz |
| | 50 ms | 1083 MHz | 361 MHz | 180 MHz | 90 MHz |
| | 100 ms | 541 MHz | 180 MHz | 90 MHz | 45 MHz |
| 45 GHz | 5 ms | - | 3750 MHz | 1800 MHz | 918 MHz |
| | 10 ms | 5625 MHz | 1875 MHz | 900 MHz | 454 MHz |
| | 20 ms | 2812 MHz | 918 MHz | 450 MHz | 226 MHz |
| | 50 ms | 1097 MHz | 362 MHz | 180 MHz | 90 MHz |
| | 100 ms | 542 MHz | 180 MHz | 90 MHz | 45 MHz |
| 60 GHz | 5 ms | - | 3750 MHz | 1818 MHz | 909 MHz |
| | 10 ms | 5454 MHz | 1818 MHz | 909 MHz | 451 MHz |
| | 20 ms | 2727 MHz | 909 MHz | 451 MHz | 225 MHz |
| | 50 ms | 1090 MHz | 361 MHz | 180 MHz | 90 MHz |
| | 100 ms | 540 MHz | 180 MHz | 90 MHz | 45 MHz |

As shown in Table 1, when the sending periodicity is short, or the maximum velocity expected to be measured is not large, the maximum value of *f*₂ - *f*₁ is large. For example, when an expected maximum velocity measurement range is 10 km/h and the sending periodicity is 5 ms, the maximum value of *f*₂ - *f*₁ exceeds 10 GHz. In a possible implementation, a difference between values of *f*₁ and *f*₂ is not large. Therefore, this is not limited in Table 1.

It should be understood that, *f*₂ - *f*₁ should be greater than a second threshold, so that a peak value location of a target on a Doppler spectrum of *f*₁ does not overlap a peak value location of the same target on a Doppler spectrum of *f*₂. Otherwise, it is difficult to accurately calculate the integer ambiguities. In a possible implementation, the second threshold is negatively correlated with total duration of velocity measurement. Longer total duration indicates a higher velocity measurement resolution, peak value locations of a same target on Doppler spectrums of different frequencies are more easily distinguished, and a smaller second threshold may be set. For example, when the total duration of the velocity measurement is 160 ms, *f*₂ - *f*₁ is greater than 100 MHz.

It should be noted that Table 1 is described by using as an example in which *f*₁ < *f*₂. When *f*₁ > *f*₂, Table 1 may be considered as a maximum value of *f*₁ - *f*₂. In this case, *f*₁ - *f*₂ is less than the first threshold, and/or *f*₁ *- f*₂ is greater than the second threshold.

Optionally, in 302, the second apparatus sends second information to the first apparatus.

The second apparatus may send the second information to the first apparatus, where the second information includes one or more of the maximum velocity expected to be measured, a maximum integer ambiguity expected to be measured, and a differential reporting range. Optionally, the second information may further include a target or a quantity of paths that are expected to be reported, or a peak value threshold that is allowed to be reported. For example, when energy or an amplitude corresponding to a specific target or a specific path on a Doppler spectrum is greater than the threshold, a measurement quantity related to the target or the path is reported. This is not specifically limited herein. It should be understood that an essential function of the maximum velocity or the maximum integer ambiguity that is expected to be measured is not limited by a specific name, and may alternatively be an expected velocity measurement range. This is not specifically limited herein.

In a possible implementation, the second information further indicates the first apparatus to perform differential reporting, and/or indicate a measurement quantity that needs to be reported by the first apparatus, for example, a Doppler frequency, a velocity, or an amplitude or a phase corresponding to the Doppler frequency on a Doppler spectrum.

For example, the second information is included in the first configuration information; or the second information may not be included in the first configuration information, but is separately sent.

Optionally, content included in the second information may be predefined in a protocol, or may be preconfigured in the first apparatus. In this case, 202 may not need to be performed.

303: The second apparatus sends the first reference signal.

The second apparatus sends the first reference signal to a target. The target may be a passive target, an active terminal device, or the first apparatus. In FIG. 3, that the second apparatus sends the reference signal to the first apparatus is used as an example. The first reference signal may be a sensing reference signal, a positioning reference signal (positioning reference signal, PRS), or another reference signal in a communication system. This is not specifically limited herein. It should be understood that the first reference signal is used to measure a velocity of the target. The velocity of the target may be a velocity of the passive target relative to the first apparatus and the second apparatus, or may be a velocity of the first apparatus relative to the second apparatus. There may be one or more passive targets, and there may be one or more velocities of targets.

Correspondingly, the first apparatus receives the first reference signal. It should be understood that a signal received by the first apparatus may be the first reference signal, or may be a signal that is obtained by reflecting the first reference signal by a passive target. For ease of description, the signal that is obtained by reflecting the first reference signal by the passive target is still referred to as the first reference signal below.

For information related to the first reference signal, refer to the descriptions in step 301. Details are not described herein again.

304: The first apparatus sends first information to the second apparatus.

The first apparatus obtains the first information based on the first reference signal, where the first information includes a first measurement value and a first difference, the first measurement value is a velocity or a Doppler frequency corresponding to the first reference signal located on the first frequency domain resource, the first difference is a difference between a second measurement value and the first measurement value, and the second measurement value is a velocity or a Doppler frequency corresponding to the first reference signal located on the second frequency domain resource.

It should be understood that the first apparatus may obtain one or more first measurement values and one or more second measurement values. Optionally, at least one first measurement value is different from one second measurement value, that is, the velocity measurement ambiguity occurs.

In the following, for ease of description, the first reference signal located on the first frequency domain resource is referred to as the second reference signal, the first reference signal located on the second frequency domain resource is the third reference signal, the frequency corresponding to the first frequency domain resource is *f*₁, and the frequency corresponding to the second frequency domain resource is *f*₂.

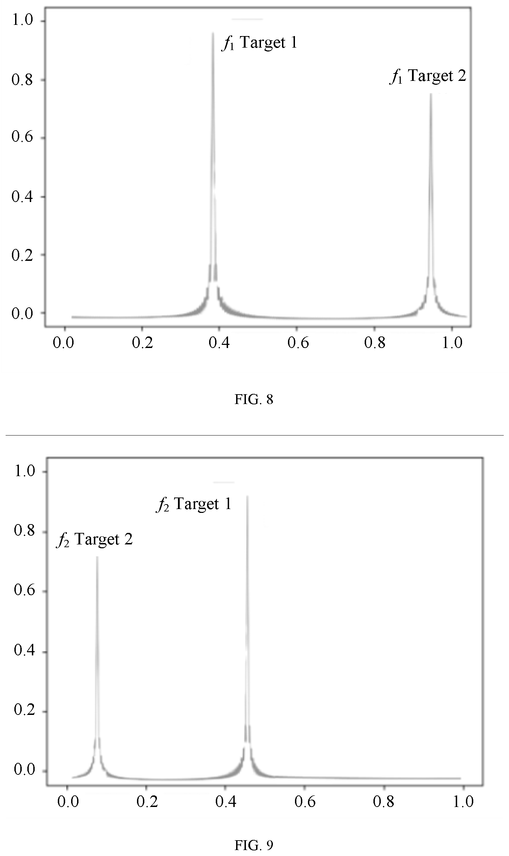

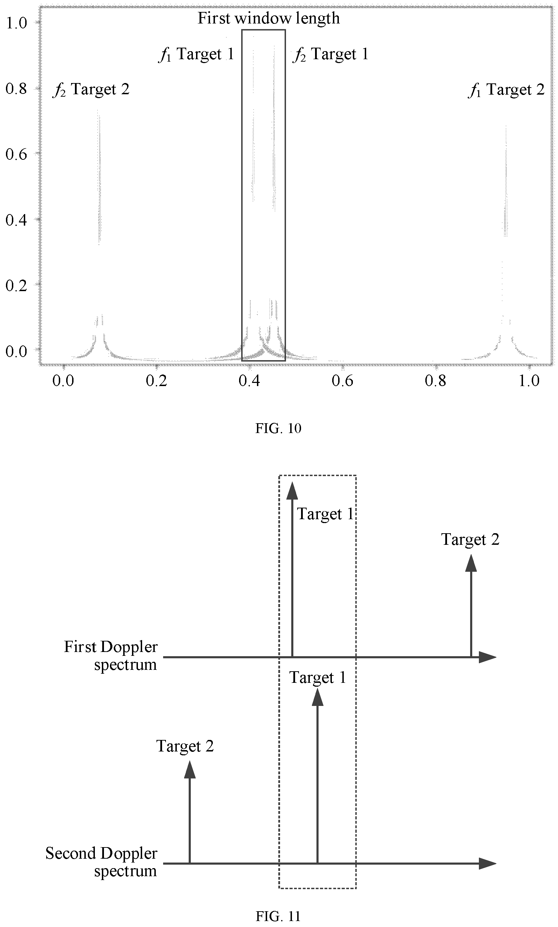

In a possible implementation, the first apparatus obtains, based on the second reference signal, a Doppler spectrum or a velocity spectrum corresponding to *f*₁, obtains the first measurement value based on the Doppler spectrum or the velocity spectrum corresponding to *f*₁, obtains, based on the third reference signal, a Doppler spectrum or a velocity spectrum corresponding to *f*₂, and obtains the second measurement value based on the Doppler spectrum or the velocity spectrum corresponding to *f*₂. For example, channel information is first obtained based on reference signals in different periodicities, and then Fourier transform is performed on the channel information obtained in the different periodicities, to obtain a Doppler spectrum. One bin on the Doppler spectrum corresponds to one Doppler frequency, and a value range of an index *g* of the bin on the Doppler spectrum may be represented as {0,1,2, ... , *Mₛ* - 1}, where *Mₛ* represents a quantity of points of Fourier transform, and a value of *Mₛ* is, for example, a quantity M of periodicities or an integer multiple of the quantity of periodicities. For example, a Doppler frequency corresponding to a bin whose *g* = 0 is 0, a Doppler frequency corresponding to a bin whose *g* = 1 is Δ*f_{d}*, a Doppler frequency corresponding to a bin whose *g* = 2 is 2Δ*f_{d}*, and the rest can be deduced by analogy, where Δ*f_{d}* represents a Doppler resolution or a granularity of the Doppler spectrum, and a value of Δ*f_{d}* is, for example, a reciprocal of total duration corresponding to reference signals in all periodicities, namely, 1/*MT* or 1/*MₛT*. The velocity spectrum may be understood as a spectrum obtained by converting a horizontal axis of the Doppler spectrum into a velocity. A value range of an index *g* of a bin may be considered unchanged, except that one bin in the velocity spectrum corresponds to one velocity. For example, a velocity corresponding to a bin whose *g* = 0 is 0, a velocity corresponding to a bin whose *g* = 1 is Δ*v*, a velocity corresponding to a bin whose *g* = 2 is 2Δ*v*, and the rest can be deduced by analogy, where Δ*v* represents a velocity resolution or a granularity of the velocity spectrum, a relationship between Δ*v* and Δ*f_{d}* may be represented as Δ*v* = Δ*f_{d}c*/2*f*, *c* represents a velocity of light, and *f* represents a frequency corresponding to a reference signal. It should be understood that each peak value in the Doppler spectrum or the velocity spectrum may be considered to correspond to one target or one path (the path is a path in which the target is located), and a velocity or a Doppler frequency corresponding to a reference signal may be understood as a Doppler frequency or a velocity corresponding to a bin at which a peak value on a Doppler spectrum or a velocity spectrum that is obtained based on the reference signal is located. Therefore, the first measurement value may be understood as a Doppler frequency or a velocity corresponding to a bin at which a peak value on the Doppler spectrum or the velocity spectrum corresponding to *f*₁ is located, and the second measurement value may be understood as a Doppler frequency or a velocity corresponding to a bin at which a peak value on the Doppler spectrum or the velocity spectrum corresponding to *f*₂ is located. Two targets are used as an example. FIG. 8 shows the velocity spectrum that corresponds to *f*₁ and is obtained by the first apparatus based on the second reference signal. FIG. 9 shows the velocity spectrum that corresponds to *f*₂ and is obtained by the first apparatus based on the third reference signal. It can be learned that there are two peak values on each velocity spectrum, and the two peak values respectively correspond to the two targets. In FIG. 10, the velocity spectrum corresponding to *f*₁ in FIG. 8 and the velocity spectrum corresponding to *f*₂ in FIG. 9 are placed in one figure for ease of comparison.

It should be noted that, in embodiments of this application, a measurement value may also be understood as a measurement quantity or a value of the measurement quantity. For example, a first measurement quantity is the velocity or the Doppler frequency corresponding to the second reference signal, and the first measurement value is a specific value of the velocity or the Doppler frequency. Similarly, the second measurement value may also be understood as a second measurement quantity or a value of the second measurement quantity. It should be understood that an essential function of the first measurement value or the second measurement value is not limited by a specific name, and the specific name is not limited in this application.

The first apparatus may report the first measurement value and the second measurement value in a differential manner. As described above, the Doppler frequency or the velocity corresponding to the peak value on the Doppler spectrum or the velocity spectrum corresponding to *f*₁ is the first measurement value, the Doppler frequency or the velocity corresponding to the peak value on the Doppler spectrum or the velocity spectrum corresponding to *f*₂ is the second measurement value, and the difference between the second measurement value and the first measurement value is the first difference. In this case, the first information includes the first measurement value and the first difference. It should be noted that the first difference is a cyclic shift difference between the second measurement value and the first measurement value. For example, the measurement quantity is a velocity. It should be understood that because the periodicity of the reference signal is large, the velocity obtained through the measurement is an ambiguous velocity. The following still uses as an example in which *f*₁ < *f*₂ for description. *v*₁ is an ambiguous velocity obtained on the velocity spectrum corresponding to *f*₁, *v*₂ is an ambiguous velocity obtained on the velocity spectrum corresponding to *f*₂, and *v*₁ and *v*₂ correspond to a same target. As described above, when *v*₂ - *v*₁ ≥ 0, the integer ambiguity *k*₁ corresponding to *f*₁ and the integer ambiguity *k*₂ corresponding to *f*₂ satisfy *k*₁ = *k*₂, as shown by a target 1 in FIG. 10. As the integer ambiguities increases, a value of *v*₂ - *v*₁ increases, and *v*₂ - *v*₁ satisfies: ${v}_{2} - {v}_{1} \leq {k}_{max} \left({V}_{max}^{1}-{V}_{max}^{2}\right)$

*kₘₐₓ* is an integer ambiguity corresponding to the maximum velocity ${V}_{max}^{truth}$ expected to be measured at the frequency *f*₁ or *f*₂, that is, the maximum integer ambiguity expected to be measured. In this case, a value range of *v*₂ - *v*₁ may be easily made to be less than a value range of *v*₂. For example, the value range of *v*₂ may be understood as 0 *to* ${V}_{max}^{2}$, and the value range of *v*₂ - *v*₁ may be understood as 0 to ${k}_{max} \left({V}_{max}^{1}-{V}_{max}^{2}\right)$. Usually, ${k}_{max} \left({V}_{max}^{1}-{V}_{max}^{2}\right) < {V}_{max}^{2}$ may be implemented while the reference signal overheads are reduced. For example, when the carrier frequency is about 60 GHz, if the maximum velocity expected to be measured is ${V}_{max}^{truth} = 8.33 m / s$, according to a conventional solution, a reference signal with a periodicity of 0.3 ms needs to be sent to implement unambiguous velocity measurement. According to the method provided in this application, a reference signal with a periodicity of 5 ms may be separately sent at two frequencies *f*₁ = 60 GHz and *f* = 60.5 GHz, corresponding to ${V}_{max}^{1} = 0.5 m / s$ and ${V}_{max}^{2} = 0.4959 m / s$. In this case, the reference signal overheads may be reduced by about 88%. In this case, *kₘₐₓ* = 16, ${k}_{max} \left({V}_{max}^{1}-{V}_{max}^{2}\right) = 0.066$, and in comparison with the value range 0 *to* ${V}_{max}^{2}$, the value range of 0 to ${k}_{max} \left({V}_{max}^{1}-{V}_{max}^{2}\right)$ is reduced by about 86.7%. When *v*₂ - *v*₁ < 0, *k*₂ = *k*₁ + 1, and *v*₂ *- v*₁ satisfies: ${v}_{2} - {v}_{1} \leq {k}_{max} \left({V}_{max}^{1}-{V}_{max}^{2}\right) - {V}_{max}^{2}$

In this case, as shown by a target 2 in FIG. 10, a peak value corresponding to the target 2 at *f*₁ is close to a rightmost side of the velocity spectrum, a peak value corresponding to the target 2 at *f*₂ is close to a leftmost side of the velocity spectrum, and the value range of *v*₂ - *v*₁ is large. For example, in this case, the value range of *v*₂ - *v*₁ may be understood as ${k}_{max} \left({V}_{max}^{1}-{V}_{max}^{2}\right) - {V}_{max}^{2}$ to 0. Because both a case of *v*₂ - *v*₁ ≥ 0 and *v*₂ *- v*₁ < 0 may occur, comprehensively, in comparison with directly reporting *v*₂, reporting *v*₂ - *v*₁ cannot reduce reporting overheads. Therefore, cyclic shift processing needs to be performed on *v*₂ - *v*₁. Specifically, when *v*₂ - *v*₁ < 0, it can be learned that: ${v}_{2} + {V}_{max}^{2} - {v}_{1} \leq {k}_{max} \left({V}_{max}^{1}-{V}_{max}^{2}\right)$

In this case, a value range of ${v}_{2} + {V}_{max}^{2} - {v}_{1}$ is the same as the value range of *v*₂ *- v*₁ when *v*₂ - *v*₁ ≥ 0, and is 0 to ${k}_{max} \left({V}_{max}^{1}-{V}_{max}^{2}\right)$. In this case, ${v}_{2} + {V}_{max}^{2} - {v}_{1}$ instead of *v*₂ - *v*₁ may be reported.

In conclusion, the first difference may be represented as: $mod \left({x}_{2}-{x}_{1},X\right)$

*mod* represents a modulo operation, *x*₁ represents the first measurement value, *x*₂ represents the second measurement value, and *X* represents a maximum value of the second measurement value or a value range of the second measurement value. It should be understood that, when *x*₂ *- x*₁ ≥ 0, the first difference is *x*₂ - *x*₁; or when *x*₂ *- x*₁ < 0, the first difference is *x*₂ *+ X - x*₁. The first measurement value or the second measurement value may be a velocity or a Doppler frequency.

In this implementation, it is ensured that the difference between the frequency corresponding to the second frequency domain resource and the frequency corresponding to the first frequency resource is less than the second threshold, so that a value range of the first difference is small, thereby facilitating reduction of measurement result reporting overheads.

It should be understood that a Doppler frequency or a velocity may be indicated by an index of a bin on a Doppler spectrum or a velocity spectrum, and the index may also be understood as an index in Doppler domain or an index of a Doppler domain basis vector. Therefore, the first apparatus may indicate the reported Doppler frequency or velocity by reporting the index in Doppler domain. Similarly, the first difference may be indicated by a difference between indexes in Doppler domain. For example, the first difference may be indicated in the following form: $mod \left({g}_{2}-{g}_{1},G\right)$

*g*₁ is an index corresponding to the peak value on the Doppler spectrum corresponding to *f*₁ (corresponding to the first measurement value), *g*₂ is an index corresponding to the peak value on the Doppler spectrum corresponding to *f*₂ (corresponding to the second measurement value), and G represents a maximum value of the index, and corresponds to maximum unambiguous Doppler or a maximum unambiguous velocity. This is not specifically limited herein. For example, a value range of *g*₁ and *g*₂ is {0, 1, 2, ..., *Mₛ*-1}, G = *Mₛ*, and *Mₛ* is the quantity of points of the Fourier transform.

When there are a plurality of velocity measurement targets, a plurality of peak values are detected on each Doppler spectrum or velocity spectrum. In other words, the first apparatus may obtain a plurality of first measurement values and a plurality of second measurement values, and correspondingly, may also obtain a plurality of first differences. It should be understood that a first measurement value and a second measurement value used to obtain each first difference should be associated. Because there is an association relationship between Doppler frequencies or velocities corresponding to a same target on Doppler spectrums or velocity spectrums corresponding to different frequencies, first differences between the Doppler frequencies or the velocities corresponding to the same target at the different frequencies are concentrated in a limited range. However, a difference between Doppler frequencies or velocities measured for different targets at different frequencies is large. As shown in FIG. 10, if differential processing is performed on an ambiguous velocity corresponding to the target 1 at *f*₁ and an ambiguous velocity corresponding to the target 2 at *f*₂, because the ambiguous velocity corresponding to the target at *f*₁ is greater than the ambiguous velocity corresponding to the target 2 at *f*₂, a value of the first difference is obtained through subtracting, from the ambiguous velocity corresponding to the target 2 at *f*₂ plus the maximum unambiguous velocity corresponding to *f*₂, the ambiguous velocity corresponding to the target 1 at *f*₁, and the value is large.

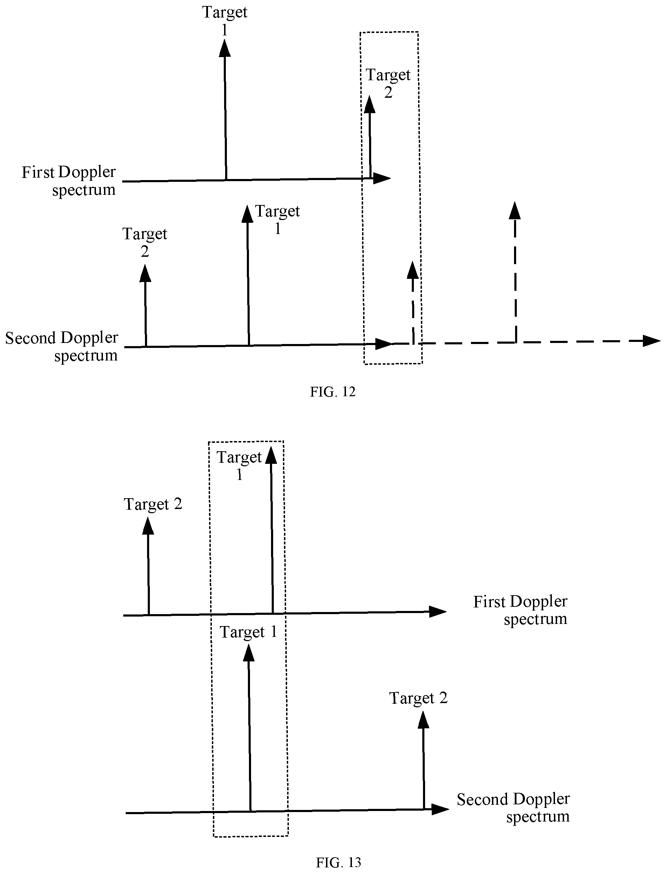

Therefore, before obtaining the plurality of first differences, the first apparatus needs to associate the plurality of first measurement values with the plurality of second measurement values in a one-to-one manner. Specifically, a first difference between a pair of two associated measurement values is less than or equal to a first window length, and the first window length is related to the maximum velocity expected to be measured or the maximum integer ambiguity expected to be measured. For example, when a measurement value is an ambiguous velocity, the first window length is ${k}_{max} \left({V}_{max}^{1}-{V}_{max}^{2}\right)$. As shown in FIG. 11, a location corresponding to the target 1 on a second Doppler spectrum and a location corresponding to the target 1 on a first Doppler spectrum are located in a window corresponding to the first window length. In other words, a difference between a second measurement value corresponding to the target 1 on the second Doppler spectrum and a first measurement value corresponding to the target 1 on the first Doppler spectrum is less than or equal to the first window length. A cyclic shift difference between a second measurement value corresponding to the target 2 on the second Doppler spectrum and a first measurement value corresponding to the target 2 on the first Doppler spectrum may also be less than or equal to the first window length. This is equivalent to that the target 2 on the second Doppler spectrum is cyclically extended forward to a location of a dashed-line target 2 in FIG. 12, and then differential processing is directly performed on the location of the target 2 on the first Doppler spectrum and the location of the dashed-line target 2 in FIG. 12. Therefore, the first measurement value corresponding to the target 1 on the first Doppler spectrum is associated with the second measurement value corresponding to the target 1 on the second Doppler spectrum, and the first measurement value corresponding to the target 2 on the first Doppler spectrum is associated with the second measurement value corresponding to the target 2 on the second Doppler spectrum.

It should be understood that the first window length may be determined by the first apparatus based on the second information. For example, the first apparatus determines the first window length based on the maximum velocity or the maximum integer ambiguity that is expected to be measured. Optionally, the first window length may also be understood as the value range of the first difference. The value range of the first difference may also be understood as a possible maximum value of the first difference minus a possible minimum value of the first difference. Therefore, the first apparatus may associate, based on the second information in a one-to-one manner, the plurality of first measurement values and the plurality of second measurement values that are obtained through measurement.

It should be noted that, in the foregoing method, *f*₁ may be less than *f*₂, or *f*₁ may be greater than *f*₂. In other words, a measurement quantity on the low frequency may be used as a reference, or a measurement quantity on the high frequency may be used as a reference. The foregoing content is mainly described by using an example in which *f*₁ is less than *f*₂. When *f*₁ is greater than *f*₂, integer ambiguities of a same target at the two frequencies satisfy *k*₂ = *k*₁ or *k*₂ = *k*₁ - 1. As shown in FIG. 13, *f*₁ is greater than *f*₂, and a maximum unambiguous velocity corresponding to *f*₁ is less than a maximum unambiguous velocity corresponding to *f*₂. Therefore, when *k*₂ = *k*₁, an ambiguous velocity corresponding to *f*₁ is greater than or equal to an ambiguous velocity corresponding to *f*₂. As shown by the target 1 in FIG. 13, a peak value corresponding to the target 1 on the first Doppler spectrum is located on a right side of a peak value corresponding to the target 1 on the second Doppler spectrum. When *k*₂ = *k*₁ - 1, as shown by the target 2 in FIG. 13, a peak value corresponding to the target 2 on the first Doppler spectrum is close to a leftmost side of the entire Doppler spectrum, and a peak value corresponding to the target 2 on the first Doppler spectrum is close to a rightmost side of the entire Doppler spectrum.

In a possible implementation, when *f*₁ is greater than *f*₂, an expression form of the first difference may be updated to: $mod \left({x}_{1}-{x}_{2},X\right)$

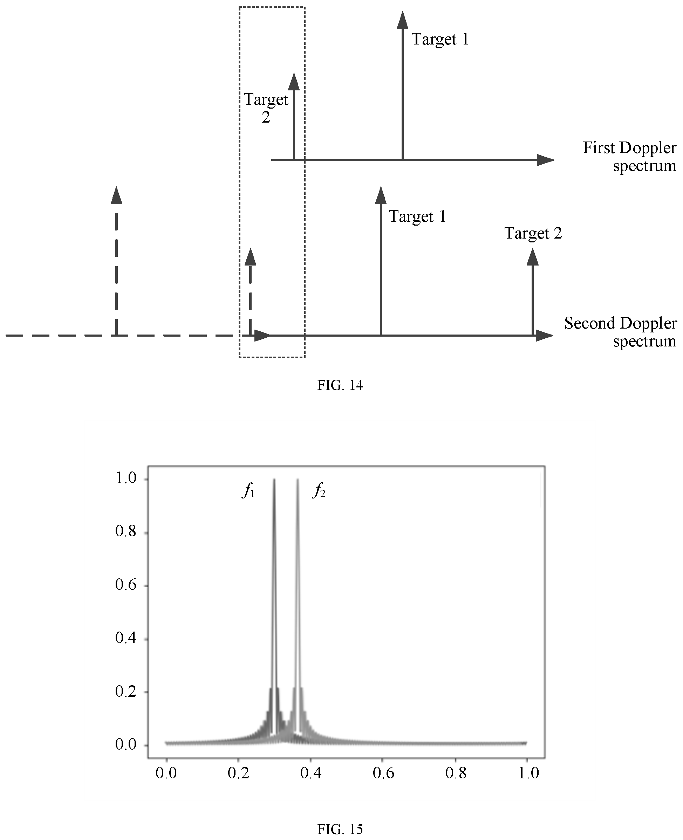

It should be understood that when *x*₁ - *x*₂ ≥ 0, the first difference is *x*₁ - *x*₂; or when *x*₁ - *x*₂ < 0, the first difference is *x*₁ - (*x*₂ - *X*) = *x*₁ - *x*₂ + *Xₘₐₓ*. *x*₁ represents the first measurement value, *x*₂ represents the second measurement value, *X* represents the maximum value of the second measurement value or the value range of the second measurement value. It may be understood that, in this case, the value range of the first difference is still limited within the first window length. As shown in FIG. 13, a location corresponding to the target 1 on the first Doppler spectrum and a location corresponding to the target 1 on the second Doppler spectrum are still located in the window corresponding to the first window length. In other words, a difference between a first measurement value corresponding to the target 1 on the first Doppler spectrum and a second measurement value corresponding to the target 1 on the second Doppler spectrum is less than or equal to the first window length. A cyclic shift difference between a first measurement value corresponding to the target 2 on the first Doppler spectrum and a second measurement value corresponding to the target 2 on the second Doppler spectrum may also be less than or equal to the first window length. This is equivalent to that the target 2 on the second Doppler spectrum is cyclically extended backward to a location of a dashed-line target 2 in FIG. 14, and then differential processing is directly performed on a location of the target 2 on the first Doppler and the location of the dashed-line target 2 in FIG. 14. It may be understood that, in this case, the expression form of the first difference indicated by the difference between the indexes in Doppler domain may alternatively be updated to *mod*(*g*₁ - *g*₂, *G*). For explanations of *g*₁, *g*₂, and *G*, refer to the foregoing descriptions. Details are not described herein again.

In a possible implementation, the first information further includes a third measurement value and a fourth measurement value, or the third measurement value and a second difference, where the second difference is a difference between the fourth measurement value and the third measurement value. The third measurement value is an amplitude or a phase corresponding to the first measurement value, and the fourth measurement value is an amplitude or a phase corresponding to the second measurement value. For example, the third measurement value is an amplitude or a phase of the peak value on the Doppler spectrum or the velocity spectrum corresponding to *f*₁, and the fourth measurement value is an amplitude or a phase of the peak value on the Doppler spectrum or the velocity spectrum corresponding to *f*₂. It may be understood that the first apparatus may obtain one or more third measurement values and one or more fourth measurement values, where each third measurement value has a corresponding first measurement value, and each fourth measurement value has a corresponding second measurement value. For example, a third measurement value is an amplitude or a phase of a peak value on the Doppler spectrum or the velocity spectrum corresponding to *f*₁, and a first measurement value corresponding to the third measurement value is a Doppler frequency or a velocity corresponding to the peak value on the Doppler spectrum or the velocity spectrum corresponding to *f*₁. A fourth measurement value is an amplitude or a phase of a peak value on the Doppler spectrum or the velocity spectrum corresponding to *f*₂, and a second measurement value corresponding to the fourth measurement value is a Doppler frequency or a velocity corresponding to the peak value on the Doppler spectrum or the velocity spectrum corresponding to *f*₂.

When the first apparatus obtains a plurality of third measurement values and a plurality of fourth measurement values, correspondingly, a plurality of second differences may also be obtained, and a third measurement value and a fourth measurement value that correspond to each second difference may be associated. A fourth measurement value associated with each third measurement value may be a fourth measurement value corresponding to a second measurement value associated with a first measurement value corresponding to the third measurement value. That is, the third measurement value may be associated with the fourth measurement value in a one-to-one manner by associating the first measurement value with the second measurement value in a one-to-one manner.

Optionally, the third measurement value may alternatively be a coefficient of the peak value corresponding to the first measurement value, and the fourth measurement value may alternatively be a coefficient of the peak value corresponding to the second measurement value.

In a possible implementation, the first information further includes the first frequency *f*₁ corresponding to the first frequency domain resource and the second frequency *f*₂ corresponding to the second frequency domain resource, or the first frequency *f*₁ and a third difference, where the third difference is a difference between the second frequency *f*₂ and the first frequency *f*₁. It should be understood that, when the first reference signal is a large-bandwidth reference signal, as shown in FIG. 3, the second apparatus may not know specific frequencies at which the first measurement value and the second measurement value that are reported by the first apparatus are obtained through measurement. When the second apparatus performs sensing settlement based on a measurement result reported by the first apparatus, for example, calculates the true velocity of the target, the second apparatus needs to know frequency information corresponding to each measurement value.

It may be understood that the first information may indicate the first frequency *f*₁ and the second frequency *f*₂ by a location of the first frequency domain resource and a location of the second frequency domain resource, for example, by an index of a start RB of the first frequency domain resource and an index of a start RB of the second frequency domain resource, or by the index of the start RB of the first frequency domain resource and a difference between the indexes of the start RBs of the second frequency domain resource and the first frequency domain resource.

It should be noted that the first apparatus may measure Doppler or a velocity of the target on more frequency domain resources. In this case, the first information may include measurement results corresponding to a plurality of frequency domain resources. Optionally, the first signal may further include frequency information corresponding to the plurality of frequency domain resources. This is not specifically limited herein. For example, the first apparatus may select, as a reference measurement value, a measurement value corresponding to a frequency domain resource with a lowest frequency or a frequency domain resource with a highest frequency in all the frequency domain resources, and a measurement value corresponding to another frequency domain resource may be reported after differential processing on the measurement value corresponding to the another frequency domain resource and the reference measurement value, to reduce the reporting overheads. For a differential calculation manner, refer to the foregoing content. Details are not described herein again.

In a possible implementation, the second apparatus receives the first information from the first apparatus, and performs sensing settlement based on the first information, for example, calculates the true velocity of the target. The following provides a possible calculation manner. The second apparatus may obtain, based on the first information, the ambiguous velocity *v*₁ corresponding to *f*₁ and the ambiguous velocity *v*₂ corresponding to *f*₂. The second apparatus determines a relationship between *k*₁ and *k*₂ based on a value relationship between *v*₁ and *v*₂. An example in which *f*₁ is less than *f*₂ is used. When *v*₁ ≤ *v*₂, *k*₂ = *k*₁; otherwise, *k*₂ = *k*₁ + 1. After the relationship between *k*₁ and *k*₂ is determined, specific values of *k*₁ and *k*₂ may be calculated according to ${v}_{1} + {k}_{1} {V}_{max}^{1} = {v}_{2} + {k}_{2} {V}_{max}^{2}$. Specifically, when *k*₂ = *k*₁, the values of *k*₁ and *k*₂ are: ${k}_{1} = {k}_{2} = \frac{{v}_{2} - {v}_{1}}{{V}_{max}^{1} - {V}_{max}^{2}}$

When *k*₂ = *k*₁ + 1, the values of *k*₁ and *k*₂ are respectively: ${k}_{1} = \frac{{v}_{2} - {v}_{1} + {V}_{max}^{2}}{{V}_{max}^{1} - {V}_{max}^{2}}$ ${k}_{2} = \frac{{v}_{2} - {v}_{1} + {V}_{max}^{1}}{{V}_{max}^{1} - {V}_{max}^{2}}$

It should be noted that an ambiguous velocity obtained by the second apparatus may have a specific error, for example, an error introduced due to noise or interference during measurement by the second apparatus, or an error introduced due to quantization during reporting. When the second apparatus calculates an integer ambiguity according to the foregoing two formulas, a value on a right side of the equation may be rounded, for example, rounded off.

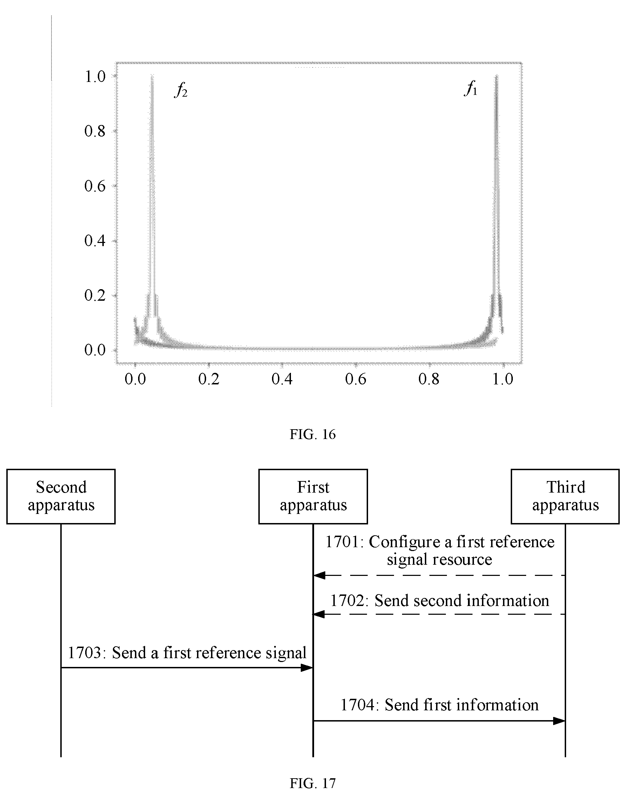

Specifically, FIG. 15 and FIG. 16 show velocity spectra that are of a single target at different frequencies and obtained based on the second reference signal and the third reference signal when *f*₁ = 60 *GHz, f*₂ = 61 *GHz*, and *T* = 2.5 ms. In FIG. 15 and FIG. 16, ${V}_{max}^{1}$ of the target is 1 m/s, and ${V}_{max}^{2}$ of the target is 0.9836 m/s. In the velocity spectrum, a horizontal axis represents a velocity, and a vertical axis represents normalized power.

In FIG. 15, a velocity *v*₁ corresponding to a peak value at *f*₁ is 0.3 m/s, and a velocity *v*₂ corresponding to a peak value at *f*₂ is 0.367 m/s, where *v*₂ - *v*₁ is a positive number. Therefore, *k*₂ = *k*₁, values of *k*₁ and *k*₂ are calculated and rounded up to obtain *k*₁ and *k*₂ that are both 4, and the foregoing values are substituted into ${V}_{trut h} = {v}_{1} + {k}_{1} {V}_{max}^{1}$ to obtain *V*_{*trut*h} that is 4.3 m/s.

In FIG. 16, a velocity *v*₁ corresponding to a peak value at *f*₁ is 0.98 m/s, and a velocity *v*₂ corresponding to a peak value at *f*₂ is 0.047 m/s, where *v*₂ *- v*₁ is a negative number. Therefore, *k*₂ = *k*₁ + 1, values of *k*₁ and *k*₂ are calculated and rounded up to obtain *k*₁ that is 3 and *k*₂ that is 4, and the foregoing values are substituted into ${V}_{trut h} = {v}_{1} + {k}_{1} {V}_{max}^{1}$ to obtain *V*_{*trut*h} that is 3.98 m/s.

It should be understood that the second apparatus may alternatively calculate the true velocity of the target by using other assistance information, to improve estimation precision of the velocity of the target. A specific application of the first information is not limited in this application.

In a possible implementation, a first apparatus may report first information to a third apparatus. Refer to FIG. 17. An information transmission method according to an embodiment of this application includes the following steps.

Optionally, in 1701, the third apparatus configures a first reference signal resource for the first apparatus.

Optionally, in 1702, the third apparatus sends second information to the first apparatus.

For a specific implementation of step 1701 and step 1702 in this embodiment, refer to step 301 and step 302 shown in FIG. 3. In this case, the method that is implemented by the second apparatus and in step 301 and step 302 is implemented by the third apparatus in step 1701 and step 1702. Details are not described herein again.

1703: The second apparatus sends a first reference signal to the first apparatus.

1704: The first apparatus sends the first information to the third apparatus.

Step 1703 and step 1704 in this embodiment are similar to step 303 and step 304 shown in FIG. 3. Details are not described herein again.

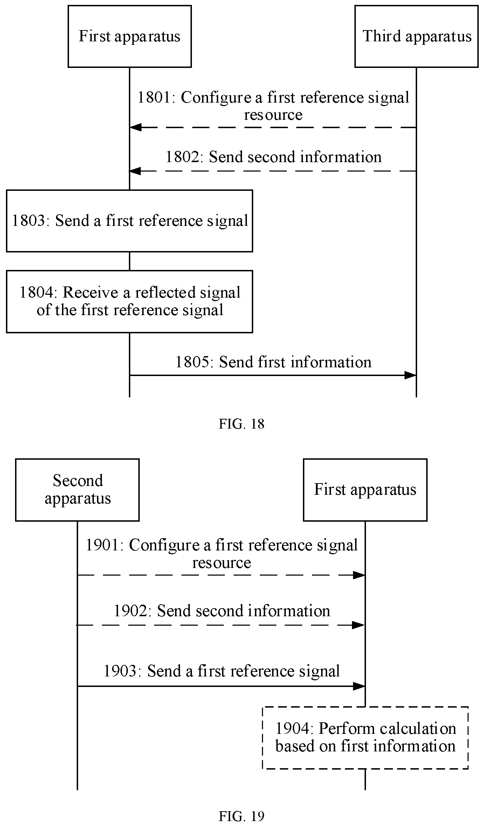

In a possible implementation, a first apparatus may receive and transmit first information and report the first information to a third apparatus. Refer to FIG. 18. An information transmission method according to an embodiment of this application includes the following steps.

Optionally, in 1801, the third apparatus configures a first reference signal resource for the first apparatus.

Optionally, in 1802, the third apparatus sends second information to the first apparatus.

Step 1801 and step 1802 in this embodiment are similar to step 1701 and step 1702 shown in FIG. 17. Details are not described herein again.

1803: The first apparatus sends a first reference signal.

For a specific implementation of step 1803 in this embodiment, refer to step 303 shown in FIG. 3. In this case, the method that is implemented by the second apparatus and in step 303 is implemented by the first apparatus in step 1803. Details are not described herein again.

1804: The first apparatus receives a reflected signal of the first reference signal.

The first apparatus receives the reflected signal of the first reference signal, and obtains the first information based on the reflected signal. An implementation in which the first apparatus obtains the first information is similar to the implementation in which the first apparatus obtains the first information in the foregoing embodiment. Details are not described herein again.

1805: The first apparatus sends the first information to the third apparatus.

Step 1805 in this embodiment is similar to step 1704 shown in FIG. 17. Details are not described herein again.

In a possible implementation, a second apparatus sends a first reference signal to a first apparatus, and the first apparatus may not report first information, or directly perform calculation based on the first information. Refer to FIG. 19. An information transmission method according to an embodiment of this application includes the following steps.

Optionally, in 1901, the second apparatus configures a first reference signal resource for the first apparatus.

Optionally, in 1902, the second apparatus sends second information to the first apparatus.

1903: The second apparatus sends the first reference signal.

Step 1901 to step 1903 in this embodiment are similar to step 301 to step 303 shown in FIG. 3. Details are not described herein again.

Optionally, in 1904, the first apparatus performs the calculation based on the first information.

The first apparatus may not report the first information to the first apparatus or the third apparatus, and the first apparatus performs the related calculation based on the first information. It should be understood that an implementation in which the first apparatus performs the related calculation based on the first information is similar to the implementation in which the second apparatus or the third apparatus performs the related calculation in the foregoing embodiments. This is not specifically limited herein.

It should be understood that the formulas in the foregoing embodiments are merely examples, and this application is not limited thereto. Any variant formula of the formulas in the foregoing embodiments falls within the protection scope of embodiments of this application.

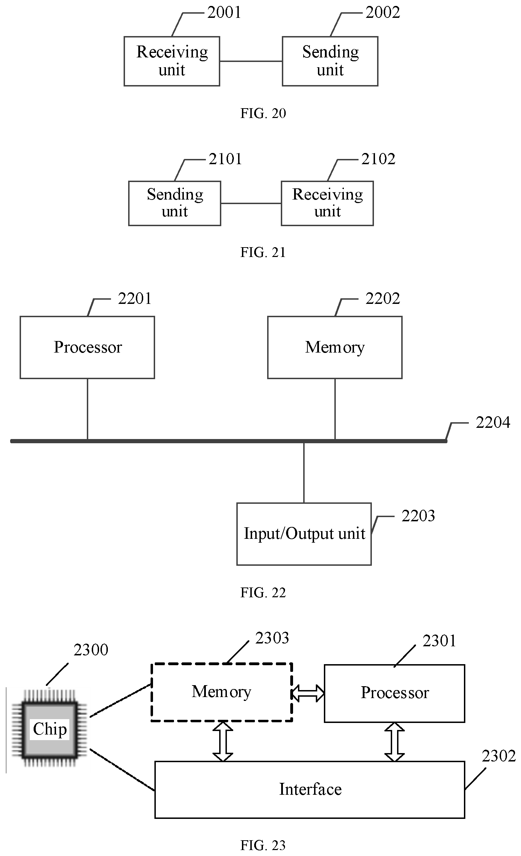

The foregoing describes the information transmission method in embodiments of this application. The following describes a communication apparatus in embodiments of this application. Refer to FIG. 20. The communication apparatus in embodiments of this application may be a terminal device, may be a component or an apparatus (for example, a processor, a chip, or a chip system) used in the terminal device, or may be a logical module or software that can implement all or some functions of the terminal device. Alternatively, the communication apparatus may be a network device, may be a component (for example, a processor, a chip, or a chip system) used in the network device, or may be a logical module or software that can implement all or some functions of the network device. An embodiment of the communication apparatus includes:
a receiving unit 2001, configured to receive a first reference signal, where a frequency domain resource on which the first reference signal is located includes a first frequency domain resource and a second frequency domain resource; and
a sending unit 2002, configured to send first information, where the first information includes a first measurement value and a first difference, the first measurement value is a velocity or a Doppler frequency corresponding to the first reference signal located on the first frequency domain resource, the first difference is a difference between a second measurement value and the first measurement value, and the second measurement value is a velocity or a Doppler frequency corresponding to the first reference signal located on the second frequency domain resource.

Refer to FIG. 21. The communication apparatus in embodiments of this application may be a terminal device, may be a component or an apparatus (for example, a processor, a chip, or a chip system) used in the terminal device, or may be a logical module or software that can implement all or some functions of the terminal device. Alternatively, the communication apparatus may be a network device, may be a component (for example, a processor, a chip, or a chip system) used in the network device, or may be a logical module or software that can implement all or some functions of the network device. An embodiment of the communication apparatus includes:
a sending unit 2101, configured to send a first reference signal, where a frequency domain resource on which the first reference signal is located includes a first frequency domain resource and a second frequency domain resource; and
a receiving unit 2102, configured to receive first information, where the first information includes a first measurement value and a first difference, the first measurement value is a velocity or a Doppler frequency corresponding to the first reference signal located on the first frequency domain resource, the first difference is a difference between a second measurement value and the first measurement value, and the second measurement value is a velocity or a Doppler frequency corresponding to the first reference signal located on the second frequency domain resource.

The following describes a communication apparatus provided in an embodiment of this application. FIG. 22 is a diagram of a structure of a communication apparatus according to an embodiment of this application. The communication apparatus may be the terminal device or the network device in the foregoing method embodiments, or may be a chip, a chip system, a processor, or the like that supports the terminal device or the network device in implementing the foregoing method. The communication apparatus may be configured to implement the method described in the foregoing method embodiments. For details, refer to the descriptions in the foregoing method embodiments.

The communication apparatus may include one or more processors 2201. The processor 2201 is connected to a memory 2202, an input/output unit 2203, and a bus 2204. The processor 2201 may be a general-purpose processor, a dedicated processor, or the like. For example, the processor 2201 may be a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

Optionally, the communication apparatus may include one or more memories 2202. The memory may store instructions. The instructions may be run on the processor 2201, to enable the communication apparatus to perform the method described in the foregoing method embodiments. Optionally, the memory 2202 may further store data. The processor 2201 and the memory 2202 may be separately disposed, or may be integrated together.

Optionally, the communication apparatus may further include a transceiver and an antenna. The transceiver may be referred to as a transceiver unit, a transceiver machine, a transceiver circuit, or the like, and is configured to implement a transceiver function. The transceiver may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

In another possible design, the processor 2201 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured for transmission or transfer of a signal.

In still another possible design, optionally, the processor 2201 may store instructions, and the instructions are run on the processor 2201, to enable the communication apparatus to perform the method described in the foregoing method embodiments. The instructions may be embedded in the processor 2201. In this case, the processor 2201 may be implemented by hardware.

In still another possible design, the communication apparatus may include a circuit. The circuit may implement a sending, receiving, or communication function of the communication device or the first terminal device in the foregoing method embodiments. The processor and the transceiver described in this embodiment of this application may be implemented on an integrated circuit (integrated circuit, IC), an analog IC, a radio frequency integrated circuit RFIC, a hybrid signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an M-channel metal oxide semiconductor (M-channel metal oxide semiconductor, MMOS), a P-channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The communication apparatus described in the foregoing embodiments may be a terminal device or a network device. However, a scope of the communication apparatus described in embodiments of this application is not limited thereto, and a structure of the communication apparatus may not be limited by FIG. 22. The communication apparatus may be an independent device or may be a part of a large device. For example, the communication apparatus may be:
(1) an independent integrated circuit IC, a chip, or a chip system or subsystem;
(2) a set that has one or more ICs, where optionally, the IC set may alternatively include a storage component configured to store data and instructions;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, or an artificial intelligence device; or
(6) others.

For a case in which the communication apparatus may be the chip or the chip system, refer to a diagram of a structure of a chip shown in FIG. 23. The chip 2300 shown in FIG. 23 includes a processor 2301 and an interface 2302. Optionally, the chip may further include a memory 2303. There may be one or more processors 2301, and there may be a plurality of interfaces 2302.

When the chip is configured to implement a function of the network device or the terminal device in embodiments of this application,
the interface 2302 is configured to receive or output a signal; and
the processor 2301 is configured to perform a data processing operation of the network device or the terminal device.

It may be understood that, in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features are combined with other features based on requirements. Correspondingly, the communication apparatus provided in embodiments of this application may also correspondingly implement these features or functions. Details are not described herein.

It should be noted that the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component.

It may be understood that the memory in this embodiment of this application may be a volatile memory or a nonvolatile memory, or may include a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example and not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

An embodiment of this application further provides a computer-readable storage medium, including instructions. When the instructions are run on a computer, the computer is enabled to perform the method in the foregoing embodiments.

An embodiment of this application further provides a computer program product including instructions. When the computer program product is run on a computer, the computer is enabled to perform the method in the foregoing embodiments.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings, direct couplings, or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the method described in embodiments of this application. The storage medium includes any medium that can store program code, for example, a USB flash drive, a removable hard disk, a read-only memory (ROM, read-only memory), a random access memory (RAM, random access memory), a magnetic disk, or an optical disc.

All or some of the foregoing embodiments may be implemented by using software, hardware, firmware, or any combination thereof. When the software is used for the implementation, all or some of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

## Claims

1. An information transmission method, wherein the method comprises:
receiving a first reference signal, wherein a frequency domain resource on which the first reference signal is located comprises a first frequency domain resource and a second frequency domain resource; and
sending first information, wherein the first information comprises a first measurement value and a first difference, the first measurement value is a velocity or a Doppler frequency corresponding to the first reference signal located on the first frequency domain resource, the first difference is a difference between a second measurement value and the first measurement value, and the second measurement value is a velocity or a Doppler frequency corresponding to the first reference signal located on the second frequency domain resource.

2. The information transmission method according to claim 1, wherein the first difference is *mod*(*x*₂ - *x*₁, *X*) or *mod*(*x*₁ - *x*₂, *X*), wherein *mod* represents a modulo operation, *x*₂ represents the second measurement value, *x*₁ represents the first measurement value, and *X* represents a difference between a maximum value and a minimum value of the second measurement value.

3. The information transmission method according to claim 2, wherein when *x*₂ is greater than or equal to *x*₁, the first difference is *x*₂ - *x*₁, or when *x*₂ is less than *x*₁, the first difference is *x*₂ + *X* - *x*₁;
or
when *x*₁ is greater than or equal to *x*₂, the first difference is *x*₁ - *x*₂, or when *x*₁ is less than *x*₂, the first difference is *x*₁ - *x*₂ + *X*.

4. The information transmission method according to any one of claims 1 to 3, wherein the first information further comprises a third measurement value and a fourth measurement value, the third measurement value is an amplitude or a phase corresponding to the first measurement value, and the fourth measurement value is an amplitude or a phase corresponding to the second measurement value;
or
the first information further comprises the third measurement value and a second difference, wherein the second difference is a difference between the fourth measurement value and the third measurement value.

5. The information transmission method according to any one of claims 1 to 4, wherein a periodicity of the first reference signal is greater than a first threshold, and the first threshold is related to a maximum velocity expected to be measured.

6. The information transmission method according to any one of claims 1 to 5, wherein a difference between a frequency corresponding to the second frequency domain resource and a frequency corresponding to the first frequency resource is less than a second threshold, and the second threshold is related to one or more of the periodicity of the first reference signal, the maximum velocity expected to be measured, and the frequency corresponding to the first frequency resource.

7. The information transmission method according to any one of claims 1 to 6, wherein the method further comprises:
receiving second information, wherein the second information comprises one or more of the maximum velocity expected to be measured, a maximum integer ambiguity expected to be measured, and a value range of the first difference.

8. The information transmission method according to any one of claims 1 to 7, wherein the first information further comprises a first frequency corresponding to the first frequency domain resource and a second frequency corresponding to the second frequency domain resource;
or
the first information further comprises the first frequency and a third difference, wherein the third difference is a difference between the second frequency and the first frequency.

9. The information transmission method according to any one of claims 1 to 7, wherein the first reference signal comprises a second reference signal and a third reference signal, the second reference signal is located on the first frequency domain resource, the third reference signal is located on the second frequency domain resource, and the second reference signal and the third reference signal have a same periodicity.

10. The information transmission method according to claim 9, wherein a time domain resource on which the second reference signal is located is the same as a time domain resource on which the third reference signal is located;
or
a time interval between the time domain resource on which the second reference signal is located and the time domain resource on which the third reference signal is located is less than a third threshold.

11. The information transmission method according to any one of claims 1 to 10, wherein the velocity in the first measurement value or the second measurement value is a velocity of one or more paths, the Doppler frequency in the first measurement value or the second measurement value is a Doppler frequency of the one or more paths, and the path corresponds to a target.

12. The information transmission method according to any one of claims 1 to 11, wherein the first measurement value is not equal to the second measurement value.

13. An information transmission method, wherein the method comprises:
sending a first reference signal, wherein a frequency domain resource on which the first reference signal is located comprises a first frequency domain resource and a second frequency domain resource; and
receiving first information, wherein the first information comprises a first measurement value and a first difference, the first measurement value is a velocity or a Doppler frequency corresponding to the first reference signal located on the first frequency domain resource, the first difference is a difference between a second measurement value and the first measurement value, and the second measurement value is a velocity or a Doppler frequency corresponding to the first reference signal located on the second frequency domain resource.

14. The information transmission method according to claim 13, wherein the first difference is *mod*(*x*₂ - *x*₁, *X*) or *mod*(*x*₁ - *x*₂, *X*), wherein *mod* represents a modulo operation, *x*₂ represents the second measurement value, *x*₁ represents the first measurement value, and *X* represents a difference between a maximum value and a minimum value of the second measurement value.

15. The information transmission method according to claim 13, wherein when *x*₂ is greater than or equal to *x*₁, the first difference is *x*₂ - *x*₁, or when *x*₂ is less than *x*₁, the first difference is *x*₂ + *X* - *x*₁;
or
when *x*₁ is greater than or equal to *x*₂, the first difference is *x*₁ - *x*₂, or when *x*₁ is less than *x*₂, the first difference is *x*₁ - *x*₂ + *X*.

16. The information transmission method according to any one of claims 13 to 15, wherein the first information further comprises a third measurement value and a fourth measurement value, the third measurement value is an amplitude or a phase corresponding to the first measurement value, and the fourth measurement value is an amplitude or a phase corresponding to the second measurement value;
or
the first information further comprises the third measurement value and a second difference, wherein the second difference is a difference between the fourth measurement value and the third measurement value.

17. The information transmission method according to any one of claims 13 to 16, wherein a periodicity of the first reference signal is greater than a first threshold, and the first threshold is related to a maximum velocity expected to be measured.

18. The information transmission method according to any one of claims 13 to 17, wherein a difference between a frequency corresponding to the second frequency domain resource and a frequency corresponding to the first frequency resource is less than a second threshold, and the second threshold is related to one or more of the periodicity of the first reference signal, the maximum velocity expected to be measured, and the frequency corresponding to the first frequency resource.

19. The information transmission method according to any one of claims 13 to 18, wherein the method further comprises:
sending second information, wherein the second information comprises one or more of the maximum velocity expected to be measured, a maximum integer ambiguity expected to be measured, and a value range of the first difference.

20. The information transmission method according to any one of claims 13 to 19, wherein the first information further comprises a first frequency corresponding to the first frequency domain resource and a second frequency corresponding to the second frequency domain resource;
or
the first information further comprises the first frequency and a third difference, wherein the third difference is a difference between the second frequency and the first frequency.

21. The information transmission method according to any one of claims 13 to 19, wherein the first reference signal comprises a second reference signal and a third reference signal, the second reference signal is located on the first frequency domain resource, the third reference signal is located on the second frequency domain resource, and the second reference signal and the third reference signal have a same periodicity.

22. The information transmission method according to claim 21, wherein a time domain resource on which the second reference signal is located is the same as a time domain resource on which the third reference signal is located;
or
a time interval between the time domain resource on which the second reference signal is located and the time domain resource on which the third reference signal is located is less than a third threshold.

23. The information transmission method according to any one of claims 13 to 22, wherein the velocity in the first measurement value or the second measurement value is a velocity of one or more paths, the Doppler frequency in the first measurement value or the second measurement value is a Doppler frequency of the one or more paths, and the path corresponds to a target.

24. The information transmission method according to any one of claims 13 to 23, wherein the first measurement value is not equal to the second measurement value.

25. A communication apparatus, comprising a module or a unit configured to perform the method according to any one of claims 1 to 12.

26. A communication apparatus, comprising a module or a unit configured to perform the method according to any one of claims 13 to 24.

27. A communication system, comprising:
a communication apparatus configured to perform the method according to any one of claims 1 to 12, and a communication apparatus configured to perform the method according to any one of claims 13 to 24.

28. A computer-readable storage medium, comprising instructions, wherein when the instructions are run on a computer, the computer is enabled to perform the method according to any one of claims 1 to 12, or the computer is enabled to perform the method according to any one of claims 13 to 24.

29. A computer program product comprising instructions, wherein when the computer program product is run on a computer, the computer is enabled to perform the method according to any one of claims 1 to 12, or the computer is enabled to perform the method according to any one of claims 13 to 24.
